# EUROPEAN PATENT APPLICATION

(11) **EP 4 814 557 A2**
(43) Date of publication of application: **30.09.2026**
(21) Application number: 26198091.6
(22) Date of filing: 12.08.2026
(51) Int. Cl.: G02B 9/64, G02B 13/00, G02B 13/04

(54) **OPTICAL SYSTEM, CAMERA MODULE, AND ELECTRONIC DEVICE**

(30) Priority: 30.12.2025 CN 202512037757
(71) Applicant: Jiangxi OFILM Optical Co., Ltd., Nanchang, Jiangxi 330096 (CN)
(72) Inventor: Feng, Ke, Jiangxi, 330096 (CN); Chu, Shuangshuo, Jiangxi, 330096 (CN); Yue, Guoqiang, Jiangxi, 330096 (CN)
(74) Representative: Metida

(57) **Abstract**

The present application provides an optical system, a camera module, and an electronic device that may meet the requirements of large field of view, miniaturization, and large aperture, and may capture images stably under complex illumination conditions. The optical system includes a total of seven lenses with refractive power. From the object side to the image side along the optical axis, the seven lenses sequentially include a first lens, a second lens, a third lens, a fourth lens, a fifth lens, a sixth lens, and a seventh lens. The first lens has negative refractive power, with an object side surface being convex in a paraxial region thereof and an image side surface being concave in a paraxial region thereof. The second lens has negative refractive power, with an object side surface being concave in a paraxial region thereof. The third lens has positive refractive power, and the fourth lens has positive refractive power. The fifth lens has refractive power. The sixth lens has refractive power. The seventh lens has positive refractive power, with an object side surface being convex in a paraxial region thereof. The optical system satisfies following relationships: 120°≤FOV≤130°, 75°≤FOV/FNO≤77.5°, wherein FOV is a maximum field of view of the optical system, and FNO is an F-number of the optical system.

## Description

### FIELD

The subject matter relates to optical imaging, and more particularly, to an optical system, a camera module, and an electronic device.

### BACKGROUND

With the rapid development of automotive intelligence and autonomous driving technology, optical systems have become the core components of assisted driving systems. From the reverse visual system that assists drivers in observing the rear side, the driving recorder that records the driving process, the automatic parking system that assists in precise parking, to the road finding system that plans driving routes, all rely on the support of optical systems.

The performances of the optical systems directly determine the reliability and safety of environmental perception, obstacle recognition, and driving decisions. The optical systems not only need high resolution, large field of view, and small distortion, but also need to adapt to different driving scenarios, but the existing optical systems cannot meet the above requirements. For example, although some optical systems may achieve megapixel resolution, problems such as chromatic aberration, astigmatism, and distortion are prominent. Some optical systems have weak ability of light transmission and are difficult to adapt to low light environments. Some optical systems with large aperture designs may not ensure high resolution quality.

### SUMMARY

Therefore, an optical system, a camera module, and an electronic device are needed, which may meet the requirements of large field angle, miniaturization, and large aperture, and may also capture images stably under complex illumination conditions.

A first aspect of the present embodiment provides an optical system including a total of seven lenses with refractive power. From an object side to an image side along an optical axis of the optical system, the seven lenses sequentially include a first lens, a second lens, a third lens, a fourth lens, a fifth lens, a sixth lens, and a seventh lens. The first lens has negative refractive power, and includes an object side surface being convex in a paraxial region thereof and an image side surface being concave in a paraxial region thereof. The second lens has negative refractive power, and includes an object side surface being concave in a paraxial region thereof. The third lens has positive refractive power, and includes an object side surface being convex in a paraxial region thereof. The fourth lens has positive refractive power, and includes an object side surface being convex in a paraxial region thereof and an image side surface being convex in a paraxial region thereof. The fifth lens has refractive power. The sixth lens has refractive power. The seventh lens has positive refractive power, and includes an object side surface being convex in a paraxial region thereof. The optical system satisfies following relationships: 120°≤FOV≤130°, and 75°≤FOV/FNO≤77.5°, wherein FOV is a maximum field of view of the optical system, and FNO is an F-number of the optical system.

In the optical system mentioned above, from the object side to the image side along the optical axis, the first lens to the seventh lens are included. The first lens has negative refractive power, and includes the object side surface being convex in a paraxial region thereof and the image side surface being concave in a paraxial region thereof. The second lens has negative refractive power, and includes the object side surface being concave in a paraxial region thereof. Thus, the first lens and the second lens may receive incident light at large angles and deflect the above incident light, thereby providing a foundation for the optical system to achieve large field of view. The third lens has positive refractive power, and includes the object side surface being convex in a paraxial region thereof. Thus, the third lens may timely and effectively deflect the light from the first lens and the second lens, which may adjust the field curvature and astigmatism that may occur in the optical system with a large field of view. The fourth lens also has positive refractive power, and includes the object side surface being convex in a paraxial region thereof and the image side surface being convex in a paraxial region thereof. Thus, the fourth lens may prevent excessive deflection of the incident light by the third lens, such that the light from the second lens may be smoothly deflected sequentially by the third lens and the fourth lens, which may further suppress the aberration generated by the optical system. Furthermore, each of the fifth and sixth lenses in the present application have refractive power. The seventh lens has positive refractive power, and includes the object side surface being convex in a paraxial region thereof. Thus, the light with different incident angles may be smoothly deflected and converged onto the imaging plane after passing through the fifth, sixth, and seventh lenses of the optical system, which may further balance the aberration of the optical system (for example, simultaneously suppress spherical aberration, chromatic aberration, field curvature, and astigmatism of the optical system), thereby improving the imaging quality over the entire field of view. At the same time, the optical path may be compressed, thereby allowing the structure of the optical system to be compact, such that the optical system may achieve good imaging quality while also meet the requirement for miniaturization.

Furthermore, since the optical system satisfies the relationship of 120°≤FOV≤130°, the maximum field of view of the optical system may be controlled within a certain range, which may allow the optical system to have a large and wide field of view. Thus, the requirement for a large field of view may be met, thereby allowing the optical system to expand the shooting range, obtaining images within a wider field of view, effectively controlling the growth of edge aberration, and ensuring good imaging quality and resolution from the center to the edge of the imaging plane.

Furthermore, since the optical system further satisfies the relationship of 75°≤FOV/FNO≤77.5°, the ratio of the maximum field of view to the F-number of the optical system may be controlled within a certain range. Thus, the optical system may adapt to different aperture sizes, and the field of view and the aperture size of the optical system may be balanced, which may allow the optical system to obtain larger amount of incident light, improve the imaging ability under alternate bright and dark, nighttime, and complex illumination conditions, providing stable and clear images, and enhancing the perception ability.

A second aspect of the present embodiment provides a camera module, including the optical system mentioned above and an image sensor located at the image side of the optical system.

The camera module includes the optical system mentioned above, which meet the requirements of large field angle, miniaturization, and large aperture, and may also capture images stably under complex illumination conditions.

A third aspect of the present embodiment provides an electronic device, including a housing and the camera module mentioned above. The camera module is mounted to the housing.

The electronic devices include the optical system mentioned above, which meet the requirements of large field angle, miniaturization, and large aperture, and may also capture images stably under complex illumination conditions.

### BRIEF DESCRIPTION OF THE DRAWINGS

Implementations of the present technology will now be described, by way of embodiment, with reference to the attached figures. Obviously, the drawings are only some embodiments of the present disclosure. For those ordinary skill in the art, other drawings can be obtained based on these drawings without creative work.
FIG. 1 is a schematic diagram of an optical system according to a first embodiment of the present application;
FIG. 2 shows a longitudinal spherical aberration diagram, an astigmatism diagram, and a distortion diagram of the optical system of the first embodiment of the present application;
FIG. 3 is a schematic diagram of an optical system according to a second embodiment of the present application;
FIG. 4 shows a longitudinal spherical aberration diagram, an astigmatism diagram, and a distortion diagram of the optical system of the second embodiment of the present application;
FIG. 5 is a schematic diagram of an optical system according to a third embodiment of the present application;
FIG. 6 shows a longitudinal spherical aberration diagram, an astigmatism diagram, and a distortion diagram of the optical system of the third embodiment of the present application;
FIG. 7 is a schematic diagram of an optical system according to a fourth embodiment of the present application;
FIG. 8 shows a longitudinal spherical aberration diagram, an astigmatism diagram, and a distortion diagram of the optical system of the fourth embodiment of the present application;
FIG. 9 is a schematic diagram of an optical system according to a fifth embodiment of the present application;
FIG. 10 shows a longitudinal spherical aberration diagram, an astigmatism diagram, and a distortion diagram of the optical system of the fifth embodiment of the present application;
FIG. 11 is a schematic diagram of an optical system according to a sixth embodiment of the present application;
FIG. 12 shows a longitudinal spherical aberration diagram, an astigmatism diagram, and a distortion diagram of the optical system of the sixth embodiment of the present application;
FIG. 13 is a schematic diagram of an optical system according to a seventh embodiment of the present application;
FIG. 14 shows a longitudinal spherical aberration diagram, an astigmatism diagram, and a distortion diagram of the optical system of the seventh embodiment of the present application;
FIG. 15 is a schematic diagram of a camera module according to an embodiment of the present application;
FIG. 16 is a schematic diagram of an electronic device according to an embodiment of the present application.

### DETAILED DESCRIPTION

Implementations of the present disclosure will now be described, by way of embodiments, with reference to the above figures. The same or similar numerals throughout the figures indicate the same or similar elements or elements with the same or similar functions. The embodiments are obviously a portion but not all of the embodiments of the present application, and should not be used to limit the present application.

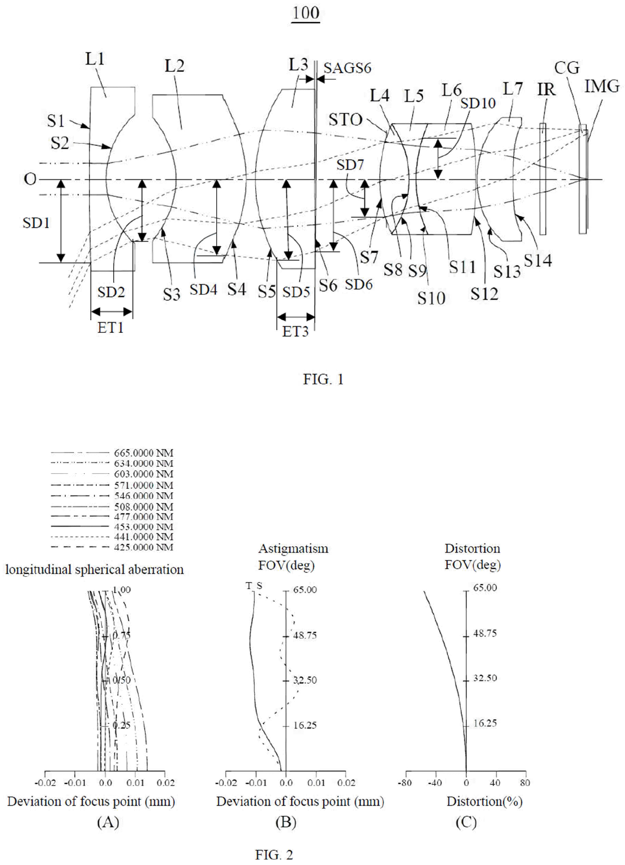

Referring to FIG. 1, an embodiment of the present embodiment provides an optical system 100, which includes a total of seven lenses with refractive power. From an object side to an image side along an optical axis O, the seven lenses sequentially include a first lens L1, a second lens L2, a third lens L3, a fourth lens L4, a fifth lens L5, a sixth lens L6, and a seventh lens L7. During the imaging process, the light from the object side of the first lens L1 will sequentially enters the first lens L1, the second lens L2, the third lens L3, the fourth lens L4, the fifth lens L5, the sixth lens L6, and the seventh lens L7, and finally forms images on the imaging plane IMG of the optical system 100.

The first lens L1 has negative refractive power, the second lens L2 has negative refractive power, the third lens L3 has positive refractive power, the fourth lens L4 has positive refractive power, the fifth lens L5 has refractive power, the sixth lens L6 has refractive power, and the seventh lens L7 has positive refractive power. The object side surface S1 of the first lens L1 is convex in a paraxial region thereof, and the image side surface S2 of the first lens L1 is concave in a paraxial region thereof. The object side surface S3 of the second lens L2 is concave in a paraxial region thereof. The object side surface S5 of the third lens L3 is convex in a paraxial region thereof. The object side surface S7 of the fourth lens L4 is convex in a paraxial region thereof. The image side surface S8 of the fourth lens L4 is convex in a paraxial region thereof. The object side surface S13 of the seventh lens L7 is convex in a paraxial region thereof.

In the optical system 100 mentioned above, from the object side to the image side along the optical axis O, the first lens L1 to the seventh lens L7 are included. The first lens L1 has negative refractive power, and includes the object side surface S1 being convex in a paraxial region thereof and the image side surface S2 being concave in a paraxial region thereof. The second lens L2 has negative refractive power, and includes the object side surface S3 being concave in a paraxial region thereof. Thus, the first lens L1 and the second lens L2 may receive incident light at large angles and deflect the above incident light, thereby providing a foundation for the optical system 100 to achieve large field of view. The third lens L3 has positive refractive power, and includes the object side surface S5 being convex in a paraxial region thereof. Thus, the third lens L3 may timely and effectively deflect the light from the first lens L1 and the second lens L2, which may adjust the field curvature and astigmatism that may occur in the optical system 100 with a large field of view. The fourth lens L4 also has positive refractive power, and includes the object side surface S7 being convex in a paraxial region thereof and the image side surface S8 being convex in a paraxial region thereof. Thus, the fourth lens L4 may prevent excessive deflection of the incident light by the third lens, such that the light from the second lens L2 may be smoothly deflected sequentially by the third lens L3 and the fourth lens L4, which may further suppress the aberration generated by the optical system 100. Furthermore, each of the fifth lens L5 and the sixth lens L6 has refractive power. The seventh lens L7 has positive refractive power, and includes the object side surface S13 being convex in a paraxial region thereof. Thus, the light with different incident angles may be smoothly deflected and converged onto the imaging plane IMG after passing through the fifth lens L5, the sixth lens L6, and the seventh lens L7 of the optical system 100, which may further balance the aberration of the optical system 100 (for example, simultaneously suppress spherical aberration, chromatic aberration, field curvature, and astigmatism of the optical system 100), thereby improving the imaging quality over the entire field of view. At the same time, the optical path may be compressed, thereby allowing the structure of the optical system 100 to be compact, such that the optical system 100 may achieve good imaging quality while also meet the requirement for miniaturization.

Furthermore, the optical system 100 satisfies the following relationship of 120°≤FOV≤130 °. For example, the value of FOV may be equal to 120°, 121°, 122°, 123°, 124°, 125°, 126°, 127°, 128°, 129°, 130°, etc. Wherein, FOV is the maximum field of view of the optical system 100. By controlling the maximum field of view of the optical system 100 within a certain range, the optical system 100 may have a large and wide field of view. Thus, the requirement for a large field of view may be met, thereby allowing the optical system 100 to expand the shooting range, obtaining images within a wider field of view, effectively controlling the growth of edge aberration, and ensuring good imaging quality and resolution from the center to the edge of the imaging plane IMG.

Furthermore, the optical system 100 further satisfies the following relationship of 75° ≤FOV/FNO≤77.5°. For example, the value of FOV/FNO may be equal to 75.0°, 75.1°, 75.3°, 75.5°, 75.7°, 75.9°, 76.0°, 76.1°, 76.3°, 76.5°, 76.7°, 76.9°, 77.0°, 77.1°, 77.2°, 77.3°, 77.4°, 77.5°, etc. Wherein, FNO is the F-number of optical system 100. By controlling the ratio of the maximum field of view to the F-number of the optical system 100 within a certain range, the optical system 100 may adapt to different aperture sizes, and the field of view and the aperture size of the optical system 100 may be balanced, which may allow the optical system 100 to obtain larger amount of incident light, improve the imaging ability under alternate bright and dark, nighttime, and complex illumination conditions, providing stable and clear images, and enhancing the perception ability.

In some embodiments, when the optical system 100 is applied to an electronic device 300 such as an in-vehicle camera or monitor, each of the first lens L1, the second lens L2, the third lens L3, the fourth lens L4, the fifth lens L5, the sixth lens L6, and the seventh lens L7 may be made of glass. Thus, the optical system 100 may have good imaging quality while reducing the impact of temperature on the above lenses. When the optical system 100 is applied to other electronic devices such as smartphones, tablet computers, smartwatches, thumb cameras, drones, etc., each of the first lens L1, the second lens L2, the third lens L3, the fourth lens L4, the fifth lens L5, the sixth lens L6, and the seventh lens L7 may also be made of plastic, thereby reducing the overall weight of the optical system 100. In other embodiments, among the multiple lenses of the optical system 100, some lenses may be made of glass and the remaining lenses may be made of plastic, thereby reducing the impact of temperature on the lenses to achieve better imaging quality, while also reducing the processing cost and the weight of the lenses to reduce the processing cost and the overall weight of the optical system 100.

In some embodiments, spherical lenses have the characteristics of simple manufacturing processes, low production costs, and may facilitate flexible design of surface shapes of the lenses to enhance the imaging resolution capability of the optical system 100. Aspherical lenses may provide more flexible design for the object or image side surfaces of the lenses, thereby enabling the lenses to effectively solve problems such as unclear imaging, distorted field of view, or narrow field of view with smaller and thinner sizes. Moreover, the optical system 100 may achieve good imaging quality without too many lenses, which may shorten the length of the optical system 100. Based on the above consideration, any one or two of the second lens L2, the third lens L3, and the seventh lens L7 mentioned above (such as the second lens L2 and the seventh lens L7) may be aspherical lens(es). Therefore, the aspherical design not only improves the processability of the lenses and is beneficial for surface design, but also allows the object or image side surfaces of the lenses to be flexibly designed. Thus, each lens may effectively solve the problems of unclear imaging, distorted field of view, or narrow field of view with a small and thin size. Also, the optical system 100 may have good imaging quality and high resolution without too many lenses, which may shorten the length of the optical system 100 and allow the optical system 100 to meet the requirement for miniaturization. In other embodiments, the surfaces of each lens of the optical system 100 may be spherical surface, aspherical surface, or any combination of spherical and aspherical surfaces according to actual needs.

In some embodiments, the optical system 100 further includes a stop STO, which may be an aperture stop STO and/or a field stop STO. For example, the stop STO may be an aperture stop STO. The stop STO may also be a field stop STO. The stop STO may also be a combination of an aperture stop STO and a field stop STO. In some embodiments, the stop STO is located between the third lens L3 and the fourth lens L4. By dividing the optical system 100 into a front lens group and a rear lens group through the stop STO, the refractive power of the optical system 100 may be reasonably allocated, thereby enabling the optical system 100 to have a large field of view and a large aperture. In other embodiments, the aperture STO may also be located between the fourth lens L4 and the fifth lens L5 or between other two lenses according to the actual needs.

In some embodiments, the optical system 100 further includes a filter IR located between the image side surface S14 of the seventh lens L7 and the imaging plane IMG of the optical system 100. Optionally, the filter IR may be an infrared cut-off filter IR to filter out infrared light and allow visible light to pass through, thereby allowing the images to match the visual experience of the human eye and improving the imaging quality. In other embodiments, the filter IR may be an infrared bandpass filter, which may filter out the light in other bands such as visible light and only allow the infrared light to pass through, thereby obtaining infrared imaging of the optical system 100. As such, the optical system 100 may capture images in dark environments or special scenarios and obtain better imaging quality, thereby further improving the imaging ability of the optical system 100 under alternate bright and dark, nighttime, and complex illumination conditions, providing stable and clear images, and enhancing the perception ability of the optical system 100. The infrared filter IR may be made of plastic, an optical glass coating, or other materials according to actual needs.

In some embodiments, the optical system 100 further includes a protective glass CG located between the image side surface S14 of the seventh lens L7 and the imaging plane IMG of the optical system 100.

In some embodiments, the image side surface S8 of the fourth lens L4 is cemented to the object side surface S9 of the fifth lens L5, and the image side surface S10 of the fifth lens L5 is cemented to the object side surface S11 of the sixth lens L6 to form a cemented lens group. The image side surface S8 of the fourth lens L4 and the object side surface S9 of the fifth lens L5 are served as cemented surfaces, and the image side surface S10 of the fifth lens L5 and the object side surface S11 of the sixth lens L6 are also served as cemented surfaces. By cementing the fourth lens L4, the fifth lens L5, and the sixth lens L6 into a cemented lens group, the aberration of the optical system 100 may further be corrected, and the total track length of the optical system 100 may also be shortened to achieve miniaturization design.

In some embodiments, the image side surface S10 of the fifth lens L5 and the object side surface S11 of the sixth lens L6 are cemented together to form a cemented lens group. That is, the image side surface S10 of the fifth lens L5 and the object side surface S11 of the sixth lens L6 are served as cemented surfaces such that the fifth lens L5 and the sixth lens L6 forms a cemented lens group according to actual needs.

In some embodiments, the optical system 100 further satisfies the following relationship of 0.85≤ImgH/F≤1.1. For example, the value of ImgH/F may be equal to 0.85, 0.86, 0.87, 0.88, 0.89, 0.90, 0.91, 0.92, 0.93, 0.94, 0.95, 0.96, 0.97, 0.98, 0.99, 1.00, 1.01, 1.02, 1.03, 1.04, 1.05, 1.06, 1.07, 1.08, 1.09, 1.10, etc. Wherein, ImgH is half of the image height corresponding to the maximum field of view of the optical system 100, and F is the effective focal length of the optical system 100. Since the optical system 100 satisfies the above relationship, the distortion generated by the optical system 100 may be effectively corrected, thereby improving the imaging quality of the optical system 100 while reducing the manufacturing difficulty of the optical system 100. In addition, the half of the image height corresponding to the maximum field of view and the effective focal length of the optical system 100 may be controlled within a reasonable range, which may enable the optical system 100 to have a long focal length and a large imaging plane, and ensure that the optical system 100 has sufficient light receiving area and sufficient field of view. Thus, the optical system 100 may satisfy the characteristics of large field of view and large imaging plane.

In some embodiments, the optical system 100 further satisfies the following relationship of 1.6≤FNO≤1.7. For example, the value of FNO may be equal to 1.61, 1.62, 1.63, 1.64, 1.65, 1.65, 1.66, 1.67, 1.68, 1.69, 1.70, etc. Wherein, FNO is the F-number of optical system 100. Since the optical system 100 satisfies the above relationship, the F-number of the optical system 100 may be controlled within a certain range, the optical system 100 may have the characteristics of a large aperture, thereby obtaining higher amount of incident light and achieving high illumination. Thus, the imaging ability of the optical system 100 in dark environments may be improved to allow the captured images to be clear, thereby improving the imaging ability under alternate bright and dark, nighttime, and complex illumination conditions.

In some embodiments, the optical system 100 further satisfies the following relationship of 7.9≤TTL/F≤10. For example, the value of TTL/F may be equal to 7.90, 7.91, 7.95, 8.0, 8.01, 8.05, 8.10, 8.15, 8.20, 8.25, 8.30, 8.35, 8.40, 8.45, 8.50, 8.55, 8.60, 8.65, 8.75, 8.80, 8.85, 8.90, 8.95, 9.00, 9.10, 9.15, 9.20, 9.25, 9.30, 9.35, 9.40, 9.45, 9.50, 9.55, 9.60, 9.65, 9.70, 9.75, 9.80, 9.85 9.90, 10, etc. Wherein, F is the effective focal length of the optical system 100, and TTL is the distance from the object side surface S1 of the first lens L1 to the imaging plane IMG of the optical system 100 at the optical axis O. Since the optical system 100 satisfies the above relationship, the ratio of the total track length to the effective focal length of the optical system 100 may be controlled within a certain range, such that the optical system 100 may achieve miniaturization while obtaining a large field of view, and the total track length of the optical system 100 may be reasonably controlled. Therefore, the optical system 100 may have small size and high imaging quality.

In some embodiments, the optical system 100 further satisfies the following relationship of -14≤F2/F≤-2. For example, the value of F2/F may be equal to -14, -13, -12, -11, -10, -9, -8, -7, -6, -5, -4, -3, -2, etc. Wherein, F2 is the effective focal length of the second lens L2, and F is the effective focal length of the optical system 100. Since the optical system 100 satisfies the above relationship, the second lens L2 may have an appropriate negative refractive power, which may reduce the degree of deflection of the light from the first lens L1, thereby avoiding excessive convergence of the light in the optical system 100 and balancing the aberrations generated by the first lens L1 and the second lens L2.

In some embodiments, the optical system 100 further satisfies the following relationship of 1.3≤|F6/F|≤3.2. For example, the value of |F6/F| may be equal to 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, etc. Wherein, F6 is the effective focal length of the sixth lens L6, and F is the effective focal length of the optical system 100. Since the optical system 100 satisfies the above relationship, the ratio of the effective focal length of the sixth lens L6 to the effective focal length of the optical system 100 may be effectively controlled within a certain range, which may further correct the aberrations of the optical system 100 and improving the imaging quality of the optical system 100.

In some embodiments, the optical system 100 further satisfies the following relationship of 0.95≤BFL/F≤2. For example, the value of BFL/F may be equal to 0.95, 0.98, 1.00, 1.05, 1.15, 1.20, 1.25, 1.30, 1.35, 1.40, 1.45, 1.50, 1.55, 1.60, 1.65, 1.70, 1.75, 1.80, 1.85, 1.90, 1.95, 2.00, etc. Wherein, F is the effective focal length of the optical system 100, and BFL is the distance from the image side surface S14 of the seventh lens L7 to the imaging plane IMG of the optical system 100 at the optical axis O. Since the optical system 100 satisfies the above relationship, the ratio of the distance from the image side surface S14 of the seventh lens L7 to the imaging plane IMG of the optical system 100 at the optical axis O to the effective focal length of the optical system 100 may be reasonably controlled within a certain range. Thus, the back focal length of the optical system 100 may be shortened, thereby avoiding an excessive size of the optical system 100 such that the optical system 100 may further meet the requirement for lightweight.

In some embodiments, the optical system 100 further satisfies the following relationship of 1.6≤ΣCT/ΣAT≤2.5. For example, the value of ΣCT/ΣAT may be equal to 1.6, 1.7, 1.8, 1.9, 2.0, 2.1, 2.2, 2.3, 2.4, 2.5, etc. Wherein, ΣCT is the sum of thicknesses of the seven lenses at the optical axis O, and ΣAT is the sum of widths of air gaps among the seven lenses at the optical axis O. Since the optical system 100 satisfies the above relationship, the air gap between two adjacent lenses and the thickness of each lens may be simultaneously controlled, thereby effectively reducing the step differences between adjacent two lenses and facilitating the bearing design of each lens of the optical system 100, and improving the assembly yield of the optical system 100.

In some embodiments, the optical system 100 further satisfies the following relationship of -8≤F1/CT1≤-5. For example, the value of F1/CT1 may be equal to -8, -7.5, -7, -6.5, -6, -5.5, -5, etc. Wherein, F1 is the effective focal length of the first lens L1, and CT1 is the thickness of the first lens L1 at the optical axis O. Since the optical system 100 satisfies the above relationship, the refractive power and the thickness of the first lens L1 may be reasonably controlled, thereby facilitating aberration correction and improving the assembly yield of the optical system 100.

In some embodiments, the optical system 100 further satisfies the following relationship of 1.9≤F4/CT4≤3.5. For example, the value of F4/CT4 may be equal to 1.9, 2.0, 2.1, 2.2, 2.3, 2.4, 2.5, 2.6, 2.7, 2.8, 2.9, 3.0, 3.1, 3.2, 3.3, 3.4, 3.5, etc. Wherein, F4 is the effective focal length of the fourth lens L4, and CT4 is the thickness of the fourth lens L4 at the optical axis O. Since the optical system 100 satisfies the above relationship, the refractive power and the thickness of the fourth lens L4 may be reasonably controlled, thereby improving the contribution of the fourth lens L4 to the overall refractive power of the optical system 100, and reducing the difficulty of processing and assembling the fourth lens L4.

In some embodiments, the optical system 100 further satisfies the following relationship of 2.8 ≤R1/(R2+CT1)≤ 40. For example, the value of R1/(R2+CT1) may be equal to 2.8, 3, 5, 7, 9, 11, 13, 15, 17, 19, 21, 23, 25, 27, 31, 33, 35, 37, 39, 40, etc. Wherein, R1 is the radius of curvature of the object side surface S1 of the first lens L1 at the optical axis O, R2 is the radius of curvature of the image side surface S2 of the first lens L1 at the optical axis O, and CT1 is the thickness of the first lens L1 at the optical axis O. Since the optical system 100 satisfies the above relationship, the radii of curvature of the object side surface S1 and the image side surface S2 of the first lens L1 at the optical axis O may be reasonably controlled, thereby reducing the difficulty of correcting the distortion at the edge field of view of the optical system 100. Thus, the distortion of the optical system 100 may be controlled within a reasonable range, which may improve the imaging quality over the entire field of view.

In some embodiments, the optical system 100 further satisfies the following relationship of -1.4≤R7/R8≤-0.1. For example, the value of R7/R8 may be equal to -1.4, -1.3, -1.2, -1.1, -1, -0.9, -0.8, -0.7, -0.6, -0.5, -0.4, -0.3, -0.2, -0.1, etc. Wherein, R7 is the radius of curvature of the object side surface S7 of the fourth lens L4 at the optical axis O, and R8 is the radius of curvature of the image side surface S8 of the fourth lens L4 at the optical axis O. Since the optical system 100 satisfies the above relationship, the shape of the fourth lens L4 may be controlled, and the aberration generated by the fourth lens L4 may be corrected, thereby improving the imaging quality of the optical system 100.

In some embodiments, the optical system 100 further satisfies the following relationship of 1.3≤|R10/SD10|≤3.3. For example, the value of |R10/SD10| may be equal to 1.3, 1.5, 1.7, 1.9, 2, 2.1, 2.3, 2.5, 2.7, 2.9, 3, 3.1, 3.3, etc. Wherein, R10 is the radius of curvature of the image side surface S10 of the fifth lens L5 at the optical axis O, and SD10 is half of the maximum effective aperture of the image side surface S10 of the fifth lens L5. Since the optical system 100 satisfies the above relationship, the ratio of the radius of curvature of the image side surface S10 of the fifth lens L5 to half of the maximum effective aperture of the image side surface S10 of the fifth lens L5 may be reasonably controlled within a certain range, which may increase the refractive power of the fifth lens L5 for the incident light such that the light may be smoothly travelled through the fifth lens L5. Also, the front aperture and the volume of the optical system 100 may also be reduced such that the optical system 100 may meet the requirement for miniaturization.

In some embodiments, the optical system 100 further satisfies the following relationship: 1≤SD1/SD2≤1.6. For example, the value of SD1/SD2 may be equal to 1, 1.05, 1.1, 1.15, 1.2, 1.25, 1.3, 1.35, 1.4, 1.45, 1.5, 1.55, 1.6, etc. Wherein, SD1 is half of the maximum effective aperture of the object side surface S1 of the first lens L1, and SD2 is half of the maximum effective aperture of the image side surface S2 of the first lens L1. Since the optical system 100 satisfies the above relationship, the ratio of half of the maximum effective aperture of the image side surface S2 to half of the maximum effective aperture of the object side surface S1 of the first lens L1 may be reasonably controlled within a certain range, thereby effectively controlling the shape and surface shape of the first lens L1, reducing the overall aberration of the optical system 100, and improving the imaging quality of the optical system 100.

In some embodiments, the optical system 100 further satisfies the following relationship of 0.9≤SD4/SD5≤1.2. For example, the value of SD4/SD5 may be equal to 0.9, 0.95, 1.0, 1.05, 1.10, 1.15, 1.20, etc. Wherein, SD4 is half of the maximum effective aperture of the image side surface S4 of the second lens L2, and SD5 is half of the maximum effective aperture of the object side surface S5 of the third lens L3. Since the optical system 100 satisfies the above relationship, the ratio of half of the maximum effective aperture of the image side surface S4 of the second lens L2 to half of the maximum effective aperture of the object side surface S3 of the second lens L3 may be reasonably controlled within a certain range, thereby effectively controlling the shape and surface of the second lens L2, reducing the overall aberration of the optical system 100, and improving the imaging quality of the optical system 100.

In some embodiments, the optical system 100 further satisfies the following relationship of 1≤SD6/SD7≤2. For example, the value of SD6/SD7 may be equal to 1.0, 1.1, 1.2, 1.3, 1.4, 1.5, 1.6, 1.7, 1.8, 1.9, 2.0, etc. Wherein, SD6 is half of the maximum effective aperture of the image side surface S6 of the third lens L3, and SD7 is half of the maximum effective aperture of the object side surface S7 of the fourth lens L4. Since the optical system 100 satisfies the above relationship, the ratio of half of the maximum effective aperture of the image side surface S6 of the third lens L3 to half of the maximum effective aperture of the object side surface S7 of the fourth lens L4 may be reasonably controlled within a certain range, thereby effectively controlling the shape and surface of the third lens L3 and the fourth lens L4, limiting the degree of concave of the object side surface S7 of the fourth lens L4, reducing the difficulty of correcting the distortion at the edge field of view, reducing the overall aberration of the optical system 100, and thus improving the imaging quality of the optical system 100.

In some embodiments, the optical system 100 further satisfies the following relationship of 2.1≤ET1/CT1≤2.7. For example, the value of ET1/CT1 may be equal to 2.10, 2.15, 2.20, 2.25, 2.30, 2.35, 2.40, 2.45, 2.50, 2.55, 2.60, etc. Wherein, ET1 is the distance from the maximum effective aperture of the object side surface S1 of the first lens L1 to the maximum effective aperture of the image side surface S2 of the first lens L1 along a direction parallel to the optical axis O, and CT1 is the thickness of the first lens L1 at the optical axis O. Since the optical system 100 satisfies the above relationship, the ratio of the distance from the maximum effective aperture of the object side surface S1 of the first lens L1 to the maximum effective aperture of the image side surface S2 of the first lens L1 along the optical axis O, with respect to the thickness of the first lens L1 at the optical axis O may be reasonably controlled within a certain range. Thus, the propagation angle and the path of the light in the first lens L1 of the optical system 100 may be controlled, thereby improving the uniformity of illumination on the imaging plane IMG of the optical system 100.

In some embodiments, the optical system 100 further satisfies the following relationship of 1.1≤CT3/ET3≤1.7. For example, the value of CT3/ET3 may be equal to 1.1, 1.15, 1.2, 1.25, 1.3, 1.35, 1.4, 1.45, 1.5, 1.55, 1.6, 1.65, 1.7, etc. Wherein, ET3 is the distance from the maximum effective aperture of the object side surface S5 of the third lens L3 to the maximum effective aperture of the image side surface S6 of the third lens L3 along a direction parallel to the optical axis O, and CT3 is the thickness of the third lens L3 at the optical axis O. Since the optical system 100 satisfies the above relationship, the ratio of the center thickness to the edge thickness of the third lens L3 may be reasonably controlled, thereby effectively optimizing the moldability of the third lens L3 and improving the ability of the third lens L3 to correct specific aberrations (such as spherical aberration and field curvature). Thus, the optical performance of the optical system 100 may be ensured, and the mass production yield and structural reliability of the optical system 100 may also be improved. Especially, the third lens L3 has positive refractive power. As such, the edge of the third lens L3 may be prevented from being too thin, thereby effectively enhancing the structural strength of the third lens L3 during the molding process, and reducing the risk of stress concentration and cracking of the third lens L3.

In some embodiments, the optical system 100 further satisfies the following relationship of |SAGS6/SD6|≤0.25. For example, the value of |SAGS6/SD6| may be equal to 0.0010, 0.0071, 0.0082, 0.0669, 0.0100, 0.2239, 0.2500, etc. Wherein, SAGS6 is the distance from the intersection of the image side surface S6 of the third lens L3 and the optical axis O to the maximum effective aperture of the image side surface S6 of the third lens L3 along a direction parallel to the optical axis O, and SD6 is half of the maximum effective aperture of the image side surface S6 of the third lens L3. Since the optical system 100 satisfies the above relationship, the shape of the image side surface S6 of the third lens L3 may be effectively controlled, thereby enabling the third lens L3 to smoothly control the direction of the light. Thus, sharp increase in aberration caused by excessive bending of the image side surface S6 of the third lens L3 may be avoided, or poor control for the optical path caused by a too flat image side surface S6 of the third lens L3 may be avoided. Meanwhile, the aberrations of optical system 100 may be corrected.

In some embodiments, the optical system 100 further satisfies the following relationship of 0.55≤SD1/(ImgH×tan(FOV/2))≤1. For example, the value of SD1/(ImgH×tan(FOV/2)) may be equal to 0.55, 0.57, 0.59, 0.60, 0.65, 0.70, 0.75, 0.80, 0.85, 0.90, 0.95, 1, etc. Wherein, SD1 is half of the maximum effective aperture of the object side surface S1 of the first lens L1, ImgH is half of the image height corresponding to the maximum field of view of the optical system 100, and F is the effective focal length of the optical system 100. Since the optical system 100 satisfies the above relationship, the distortion generated by the optical system 100 may be effectively corrected and controlled within a reasonable range, thereby improving the imaging quality of the optical system 100.

In some embodiments, the optical system 100 further satisfies the following relationship of 115°≤(FOV×F)/ImgH≤140°. For example, the value of (FOV×F)/ImgH may be equal to 115°, 117°, 119°, 120°, 123°, 125°, 127°, 130°, 131°, 133°, 137°, 140°, etc. Wherein, ImgH is half of the image height corresponding to the maximum field of view of the optical system 100, and F is the effective focal length of optical system 100. Since the optical system 100 satisfies the above relationship, the distortion generated by the optical system 100 may be further corrected and controlled within a reasonable range, thereby improving the imaging quality of the optical system 100.

In some embodiments, the optical system 100 further satisfies the following relationship of 0.43≤ImgH/(F×tan (FOV/2))≤0.57. For example, the value of ImgH/(F×tan(FOV/2)) may be equal to 0.43, 0.45, 0.47, 0.50, 0.51, 0.53, 0.57, etc. Wherein, ImgH is half of the image height corresponding to the maximum field of view of the optical system 100, and F is the effective focal length of optical system 100. Since the optical system 100 satisfies the above relationship, the front aperture of the optical system 100 may be reduced, thereby effectively achieve balance among the front aperture, the maximum field of view, and the size of the imaging plane of the optical system 100. Also, the aberration of the optical system 100 may be balanced, for example, the spherical aberration, the chromatic aberration, the field curvature, and the astigmatism of the optical system 100 may be simultaneously suppressed, thereby improving the imaging quality over the entire field of view. At the same time, the optical path may be compressed to allow the structure of the optical system 100 to be compact, such that the optical system 100 may meet the requirements of miniaturization while having good imaging quality.

In some embodiments, the optical system 100 further satisfies the following relationship of -2.1 ≤F1/F≤-1.5. For example, the value of F1/F may be equal to -2.1, -2.0, -1.9, -1.8, -1.7, -1.6, -1.5, etc. Wherein, F is the effective focal length of the optical system 100, and F1 is the effective focal length of the first lens L1. Since the optical system 100 satisfies the above relationship, the ratio of the effective focal length of the first lens L1 to the effective focal length of the optical system 100 may be reasonably controlled within a certain range so that the first lens L1 has negative refractive power. Thus, the optical system 100 may collect the light with a large incident angle and achieve a large field of view.

In some embodiments, the optical system 100 further satisfies the following relationship of 2.9≤F3/F≤3.6. For example, the value of F3/F may be equal to 2.9, 3, 3.1, 3.2, 3.3, 3.4, 3.5, 3.6, etc. Wherein, F is the effective focal length of the optical system 100, and F3 is the effective focal length of the third lens L3. Since the optical system 100 satisfies the above relationship, the ratio of the effective focal length of the third lens L3 to the effective focal length of the optical system 100 may be reasonably controlled within a certain range so that the third lens L3 has positive refractive power. Thus, the light from the front lens group may be effectively converged to improve the imaging quality of the optical system 100.

In some embodiments, the optical system 100 further satisfies the following relationship of 1.8≤F4/F≤3.3. For example, the value of F4/F may be equal to 1.8, 1.9, 2, 2.1, 2.2, 2.3, 2.4, 2.5, 2.6, 2.7, 2.8, 2.9, 3, 3.1, 3.2, 3.3, etc. Wherein, F is the effective focal length of the optical system 100, and F4 is the effective focal length of the fourth lens L4. Since the optical system 100 satisfies the above relationship, the ratio of the effective focal length of the fourth lens L4 to the effective focal length of the optical system 100 may be reasonably controlled within a certain range so that the fourth lens L4 has positive refractive power. Thus, the light may be effectively converged to improve the imaging quality of the optical system 100.

In some embodiments, the optical system 100 further satisfies the following relationship of 0.8≤|F5/F|≤1.9. For example, the value of |F5/F| may be equal to 0.8, 0.9, 1, 1.1, 1.2, 1.3, 1.4, 1.5, 1.6, 1.7, 1.8, 1.9, etc. Wherein, F is the effective focal length of the optical system 100, and F5 is the effective focal length of the fifth lens L5. Since the optical system 100 satisfies the above relationship, the ratio of the effective focal length of the fifth lens L5 to the effective focal length of the optical system 100 may be reasonably controlled within a certain range. Thus, the light may be smoothly travelled to the imaging plane IMG to improve the resolution capability of the optical system 100.

In some embodiments, the optical system 100 further satisfies the relationship equation of 3.2 ≤F7/F≤5. For example, the value of F7/F may be equal to 3.2, 3.4, 3.6, 3.8, 4, 4.2, 4.4, 4.6, 4.8, 5, etc. Wherein, F is the effective focal length of the optical system 100, and F7 is the effective focal length of the seventh lens L7. Since the optical system 100 satisfies the above relationship, the seventh lens L7 may have appropriate positive refractive power, which may prevent the light from being excessively converged. Thus, the light incident on the imaging plane IMG from the edge field of view may be suppressed, and various aberrations of the optical system 100 may be balanced, thereby improving the imaging quality of the optical system 100.

In some embodiments, the optical system 100 further satisfies the following relationship of 3.5≤R1/R2≤50. For example, the value of R1/R2 may be equal to 3.5, 4, 5, 10, 15, 20, 25, 30, 35, 40, 45, 50, etc. Wherein, R1 is the radius of curvature of the object side surface S1 of the first lens L1 at the optical axis O, and R2 is the radius of curvature of the image side surface S2 of the first lens L1 at the optical axis O. Since the optical system 100 satisfies the above relationship, the ratio of the radii of curvature of the image side surface S2 and the object side surface S1 of the first lens L1 may be reasonably controlled within a certain range. Thus, the difference in the surface shapes of the first lens L1 may be reasonable, which may control the shape of the first lens L1, correct the aberration generated by the first lens L1, improve the imaging quality, and reduce the processing difficulty of the first lens L1.

In some embodiments, the optical system 100 further satisfies the following relationship of 0.8≤|R4/R3|≤3.5. For example, the value of |R4/R3| may be equal to 0.8, 0.9, 1, 1.1, 1.3, 1.5, 1.7, 1.9, 2.0, 2.1, 2.3, 2.5, 2.7, 2.9, 3.0, 3.1, 3.3, 3.5, etc. Wherein, R3 is the radius of curvature of the object side surface S3 of the second lens L2 at the optical axis O, and R4 is the radius of curvature of the image side surface S4 of the second lens L2 at the optical axis O. Since the optical system 100 satisfies the above relationship, the ratio of the radii of curvature of the image side surface S4 and the object side surface S3 of the second lens L2 may be reasonably controlled within a certain range, which may control the shape of the second lens L2, correct the aberration generated by the second lens L2, improve the imaging quality, and reduce the processing difficulty of the second lens L2.

In some embodiments, the optical system 100 further satisfies the following relationship of |R6/R5|≥ 0.5. For example, the value of |R6/R5| may be equal to 0.5, 0.51, 0.52, 1, 1.5, 1.9, 2, etc. Wherein, R5 is the radius of curvature of the object side surface S5 of the third lens L3 at the optical axis O, and R6 is the radius of curvature of the image side surface S6 of the third lens L3 at the optical axis O. Since the optical system 100 satisfies the above relationship, the shape of the third lens L3 may be reasonably controlled, the aberration of the optical system 100 may be corrected, and the spherical aberration, chromatic aberration, and field curvature of the optical system 100 may be comprehensively balanced, thereby reducing the risk of generation of ghost images by the third lens L3, and improving the resolution ability of the optical system 100. Also, the processing difficulty of the third lens L3 may be reduced.

In some embodiments, the optical system 100 further satisfies the following relationship of -10≤R9/R10≤-0.7. For example, the value of R9/R10 may be equal to -10, -9, -8, -7, -6, -5, -4, -3, -2, -1, -0.95, -0.9, -0.85, -0.8, -0.75, -0.7, etc. Wherein, R9 is the radius of curvature of the object side surface S9 of the fifth lens L5 at the optical axis O, and R10 is the radius of curvature of the image side surface S10 of the fifth lens L5 at the optical axis O. Since the optical system 100 satisfies the above relationship, the surface shape of the fifth lens L5 may be reasonably controlled, thereby effectively controlling the contribution of the fifth lens L5 to the astigmatism and ensuring the imaging quality of the middle field of view. Thus, the aberration of the optical system 100 may be corrected, and the balance of the distortion of the optical system 100 may be ensured. Also, excessive curvature of the object side surface S9 and the image side surface S10 of the fifth lens L5 at the optical axis O may be avoided, and the processing difficulty of the fifth lens L5 may be reduced.

In some embodiments, the optical system 100 further satisfies the following relationship of -4.5≤R12/R11≤-1.5. For example, the value of R12/R11 may be equal to -4.5, -4.4, -4.3, -4.2, -4.1, -4, -3.9, -3.8, -3.7, -3.6, -3.5, -3.4, - 3.3, -3.2, -3.1, -3, -2.9, -2.8, -2.7, -2.6, -2.5, -1.5, etc. Wherein, R11 is the radius of curvature of the object side surface S11 of the sixth lens L6 at the optical axis O, and R12 is the radius of curvature of the image side surface S12 of the sixth lens L6 at the optical axis O. Since the optical system 100 satisfies the above relationship, the surface shape of the sixth lens L6 may be reasonably controlled, such that the shape of the sixth lens L6 will not be too curved. Thus, the axial aberration of the optical system 100 may be effectively corrected. Also, the tolerance sensitivity of the optical system 100 may also be reduced, and the imaging quality of the optical system 100 may be improved.

The surface shape of each aspherical surface may be expressed but not limited to the following aspherical formula: $Z = \frac{{cr}^{2}}{1 + \sqrt{1 - \left(k+1\right) {c}^{2} {r}^{2}}} + \sum A i {r}^{i}$

Wherein, Z is a distance from a point of the aspherical surface to the vertex of the aspherical surface along a direction parallel to the optical axis, c is a curvature of the vertex of the aspherical surface, c=1/Y (Y is the radius of curvature, i.e., the paraxial curvature c is the reciprocal of the Y radius in Table 1A), r is a distance from a point of the aspherical surface to the optical axis O, k is the cone constant, Ai is the correction coefficient corresponding to the i^{th} high-order term of the aspherical surface.

The optical system 100 of the above embodiments will be described as follows with detail parameters.

### First embodiment

The optical system 100 according to the first embodiment of the present application is shown in FIG. 1. The optical system 100 includes a first lens L1, a second lens L2, a third lens L3, a stop STO, a fourth lens L4, a fifth lens L5, a sixth lens L6, a seventh lens L7, a filter IR, and a protective glass CG, which are sequentially arranged from the object side to the image side along the optical axis O. The first lens L1 has negative refractive power, the second lens L2 has negative refractive power, the third lens L3 has positive refractive power, the fourth lens L4 has positive refractive power, the fifth lens L5 has negative refractive power, the sixth lens L6 has positive refractive power, and the seventh lens L7 has positive refractive power.

The object side surface S1 of the first lens L1 is convex in a paraxial region thereof, and the image side surface S2 of the first lens L1 is concave in a paraxial region thereof. The object side surface S3 of the second lens L2 is concave in a paraxial region thereof, and the image side surface S4 of the second lens L2 is convex in a paraxial region thereof. The object side surface S5 of the third lens L3 is convex in a paraxial region thereof, and the image side surface S6 of the third lens L3 is concave in a paraxial region thereof. The object side surface S7 of the fourth lens L4 is convex in a paraxial region thereof, and the image side surface S8 of the fourth lens L4 is convex in a paraxial region thereof. The object side surface S9 of the fifth lens L5 is concave in a paraxial region thereof, and the image side surface S10 of the fifth lens L5 is concave in a paraxial region thereof. The object side surface S11 of the sixth lens L6 is convex in a paraxial region thereof, and the image side surface S12 of the sixth lens L6 is convex in a paraxial region thereof. The object side surface S13 of the seventh lens L7 is convex in a paraxial region thereof, and the image side surface S14 of the seventh lens L7 is concave in a paraxial region thereof.

Specifically, the Y radius in Table 1A refers to the radius of curvature of the object side surface or the image side surface of the related surface numeral at the optical axis O. The fourth lens L4, the fifth lens L5, and the sixth lens L6 are cemented together to form a cemented lens group. The surface type and the Y radius of the image side surface S8 of the fourth lens L4 are the same as those of the object side surface S9 of the fifth lens L5. The surface type and the Y radius of the image side surface S10 of the fifth lens L5 are the same as those of the object side surface S11 of the sixth lens L6. In the "thickness" column of one specific lens, the first value is the thickness of the lens at the optical axis O, and the second value is the distance from the image side surface of the lens to the next optical surface at the optical axis O. In the "thickness" column of the stop STO, the value is the distance from the stop STO to the vertex of the next surface (the vertex refers to an intersection between the surface and the optical axis O) at the optical axis O. The direction from the object side surface S1 of the first lens L1 to the image side surface S14 of the seventh lens L7 is assumed to be a positive direction of the optical axis O. When the value in the "thickness" column of the stop STO is negative, the stop STO is located at the image side of the vertex of the next surface; when the value in the "thickness" column of the stop STO is positive, the stop STO is located at the object side of the vertex of the next surface. It can be understood that the units of the Y radius, the thickness, and the effective focal length in Table 1A are in millimeters, and the refractive index, the Abbe number, and the effective focal length in Table 1A are obtained by the light with reference wavelength of 546.0000nm.

In the first embodiment, the object side surface S3 and the image side surface S4 of the second lens L2 are aspherical surfaces, and the object side surface S13 and the image side surface S14 of the seventh lens L7 are also aspherical surfaces. Table 1B provides the cone constant k and high-order coefficients A4, A6, A8, A10, A12, A14, A16 that can be applied for the aspherical surfaces in the first embodiment.

**Table 1A**

| First embodiment | | | | | | | | |
|---|---|---|---|---|---|---|---|---|
| F=3.80mm, FNO=1.68, FOV=130°, TTL=35.492mm, ImgH=3.56mm | | | | | | | | |
| Surface numeral | Surface name | Surface type | Y radius | Thickness | Material | Refractive index | Abbe number | Focal length |
| OBJ | object side | sphere | infinity | infinity | | | | |
| 1 | first lens | sphere | 196.668 | 1.200 | glass | 2.003 | 28.316 | -6.244 |
| 2 | | sphere | 6.276 | 4.979 | | | | |
| 3 | second lens | asphere | -6.153 | 4.935 | glass | 1.809 | 40.970 | -45.245 |
| 4 | | asphere | -10.037 | 0.670 | | | | |
| 5 | third lens | sphere | 11.761 | 4.215 | glass | 2.001 | 29.151 | 11.802 |
| 6 | | sphere | 240.272 | 5.144 | | | | |
| STO | stop | sphere | infinity | -0.486 | | | | |
| 8 | fourth lens | sphere | 9.470 | 2.069 | glass | 1.593 | 68.342 | 6.909 |
| 9 | fifth lens | sphere | -6.803 | 0.500 | glass | 1.855 | 25.155 | -4.395 |
| 11 | sixth lens | sphere | 9.555 | 4.276 | glass | 1.593 | 68.624 | 11.974 |
| 12 | | sphere | -24.375 | 0.095 | | | | |
| 13 | seventh lens | asphere | 7.152 | 2.574 | glass | 1.619 | 63.855 | 14.112 |
| 14 | | asphere | 32.283 | 1.915 | | | | |
| 15 | filter | sphere | infinity | 0.400 | glass | 1.517 | 64.199 | |
| 16 | | sphere | infinity | 2.357 | | | | |
| 17 | protective glass | sphere | infinity | 0.500 | glass | 1.517 | 64.199 | |
| 18 | | sphere | infinity | 0.149 | | | | |
| IMG | imaging plane | sphere | infinity | 0.000 | | | | |

**Table 1B**

| Aspherical coefficient of first embodiment | | | | |
|---|---|---|---|---|
| Surface numeral | 3 | 4 | 13 | 14 |
| k | 8.233425E-01 | -1.146544E+00 | 1.264880E+00 | 3.260711E+01 |
| A4 | 8.925532E-04 | -3.928413E-06 | -4.227279E-04 | 6.251728E-04 |
| A6 | -3.385891E-05 | -2.080595E-06 | 3.517226E-05 | 4.997730E-05 |
| A8 | 1.737213E-05 | 7.301640E-07 | -5.319007E-06 | -4.111959E-06 |
| A10 | -2.486439E-06 | -7.477400E-08 | 3.635584E-07 | 3.527613E-07 |
| A12 | 2.117521E-07 | 4.093869E-09 | -9.873231E-09 | -4.133875E-09 |
| A14 | -9.307970E-09 | -1.130682E-10 | 0.000000E+00 | 0.000000E+00 |
| A16 | 1.738626E-10 | 1.249711E-12 | 0.000000E+00 | 0.000000E+00 |

Referring to part (A) of FIG. 2, which is a longitudinal aberration diagram of the optical system 100 in the first embodiment at wavelengths of 665.0000 nm, 634.0000 nm, 603.0000 nm, 571.0000 nm, 546.0000 nm, 508.0000 nm, 477.0000 nm, 453.0000 nm, 441.0000 nm, and 425.0000 nm. Wherein, the horizontal coordinate along the X-axis represents the deviation of the focus point in millimeters, and the vertical coordinate along the Y-axis represents the normalized field of view. From Part (A) of FIG. 2, the spherical aberration data of the optical system 100 in the first embodiment is good, indicating that the imaging quality of the optical system 100 in this embodiment is good. Referring to part (B) of FIG. 2, which is an astigmatism diagram of the optical system 100 in the first embodiment at a wavelength of 453.0000nm. Wherein, the horizontal coordinate along the X-axis represents the deviation of the focus point in millimeters, and the vertical coordinate along the Y-axis represents the field of angle in degrees. The T curve of the astigmatism diagram represents the curvature of the imaging plane IMG in the tangential direction. The S curve of the astigmatism diagram represents the curvature of the imaging plane IMG in the sagittal direction. From Part (B) of FIG. 2, the astigmatism of the optical system 100 has been compensated at this wavelength. Referring to part (C) of FIG. 2, which is a distortion diagram of the optical system 100 in the first embodiment at a wavelength of 453.0000nm. Wherein, the horizontal coordinate along the X-axis represents the distortion, and the vertical coordinate along the Y-axis represents field of view in degrees. From part (C) of FIG. 2, the distortion of the optical system 100 has been corrected at this wavelength.

### Second embodiment

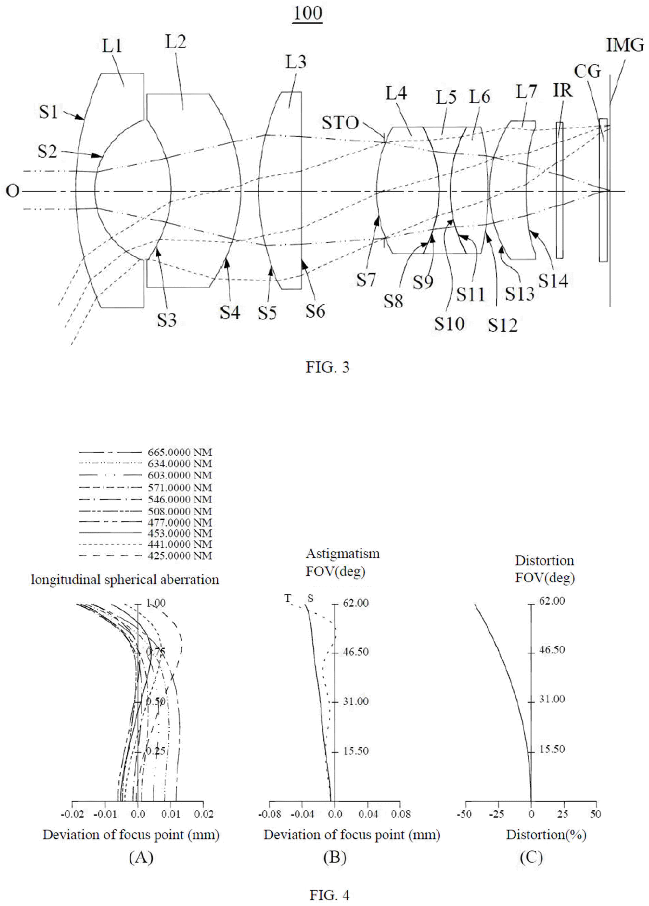

The optical system 100 according to the second embodiment of the present application is shown in FIG. 3. The optical system 100 includes a first lens L1, a second lens L2, a third lens L3, a stop STO, a fourth lens L4, a fifth lens L5, a sixth lens L6, a seventh lens L7, a filter IR, and a protective glass CG, which are sequentially arranged from the object side to the image side along the optical axis O. The first lens L1 has negative refractive power, the second lens L2 has negative refractive power, the third lens L3 has positive refractive power, the fourth lens L4 has positive refractive power, the fifth lens L5 has negative refractive power, the sixth lens L6 has positive refractive power, and the seventh lens L7 has positive refractive power.

The object side surface S1 of the first lens L1 is convex in a paraxial region thereof, and the image side surface S2 of the first lens L1 is concave in a paraxial region thereof. The object side surface S3 of the second lens L2 is concave in a paraxial region thereof, and the image side surface S4 of the second lens L2 is convex in a paraxial region thereof. The object side surface S5 of the third lens L3 is convex in a paraxial region thereof, and the image side surface S6 of the third lens L3 is concave in a paraxial region thereof. The object side surface S7 of the fourth lens L4 is convex in a paraxial region thereof, and the image side surface S8 of the fourth lens L4 is convex in a paraxial region thereof. The object side surface S9 of the fifth lens L5 is concave in a paraxial region thereof, and the image side surface S10 of the fifth lens L5 is concave in a paraxial region thereof. The object side surface S11 of the sixth lens L6 is convex in a paraxial region thereof, and the image side surface S12 of the sixth lens L6 is convex in a paraxial region thereof. The object side surface S13 of the seventh lens L7 is convex in a paraxial region thereof, and the image side surface S14 of the seventh lens L7 is concave in a paraxial region thereof.

Specifically, the Y radius in Table 2A refers to the radius of curvature of the object side surface or the image side surface of the related surface numeral at the optical axis O. The fourth lens L4, the fifth lens L5, and the sixth lens L6 are cemented together to form a cemented lens group. The surface type and the Y radius of the image side surface S8 of the fourth lens L4 are the same as those of the object side surface S9 of the fifth lens L5. The surface type and the Y radius of the image side surface S10 of the fifth lens L5 are the same as those of the object side surface S11 of the sixth lens L6. The first value in the "thickness" parameter column of the lens is the thickness of the lens at the optical axis O, and the second value is the distance from the image side surface of the lens to the rear surface at the optical axis O. In the "thickness" column of one specific lens, the first value is the thickness of the lens at the optical axis O, and the second value is the distance from the image side surface of the lens to the next optical surface at the optical axis O. In the "thickness" column of the stop STO, the value is the distance from the stop STO to the vertex of the next surface (the vertex refers to an intersection between the surface and the optical axis O) at the optical axis O. The direction from the object side surface S1 of the first lens L1 to the image side surface S14 of the seventh lens L7 is assumed to be a positive direction of the optical axis O. When the value in the "thickness" column of the stop STO is negative, the stop STO is located at the image side of the vertex of the next surface; when the value in the "thickness" column of the stop STO is positive, the stop STO is located at the object side of the vertex of the next surface. It can be understood that the units of the Y radius, the thickness, and the effective focal length in Table 2A are in millimeters, and the refractive index, the Abbe number, and the effective focal length in Table 2A are obtained by the light with reference wavelength of 546.0000nm.

In the second embodiment, the object side surface S3 and the image side surface S4 of the second lens L2 are aspherical surfaces, and the object side surface S13 and the image side surface S14 of the seventh lens L7 are also aspherical surfaces. Table 2B provides the cone constant k and high-order coefficients A4, A6, A8, A10, A12, A14, and A16 that can be applied for the aspherical surfaces in the second embodiment.

**Table 2A**

| Second embodiment | | | | | | | | |
|---|---|---|---|---|---|---|---|---|
| F=3.86mm, FNO=1.62, FOV=124°, TTL=33.506mm, ImgH=4.10mm | | | | | | | | |
| Surface numeral | Surface name | Surface type | Y radius | Thickness | Material | Refractive index | Abbe number | Focal length |
| OBJ | object side | sphere | infinity | infinity | | | | |
| 1 | first lens | sphere | 17.528 | 1.200 | glass | 2.003 | 28.316 | -6.448 |
| 2 | | sphere | 4.710 | 4.817 | | | | |
| 3 | second lens | asphere | -6.242 | 4.300 | glass | 1.809 | 40.970 | -51.092 |
| 4 | | asphere | -9.606 | 1.117 | | | | |
| 5 | third lens | sphere | 13.994 | 2.680 | glass | 2.001 | 29.151 | 13.558 |
| 6 | | sphere | 2271.706 | 5.220 | | | | |
| STO | stop | sphere | infinity | -0.483 | | | | |
| 8 | fourth lens | sphere | 8.291 | 3.926 | glass | 1.593 | 68.342 | 7.561 |
| 9 | fifth lens | sphere | -8.291 | 0.699 | glass | 1.855 | 25.155 | -4.560 |
| 11 | sixth lens | sphere | 8.291 | 2.379 | glass | 1.593 | 68.624 | 9.671 |
| 12 | | sphere | -17.421 | 0.099 | | | | |
| 13 | seventh lens | asphere | 7.513 | 2.300 | glass | 1.619 | 63.855 | 17.589 |
| 14 | | asphere | 20.661 | 1.880 | | | | |
| 15 | filter | sphere | infinity | 0.400 | glass | 1.517 | 64.199 | |
| 16 | | sphere | infinity | 2.323 | | | | |
| 17 | protective glass | sphere | infinity | 0.500 | glass | 1.517 | 64.199 | |
| 18 | | sphere | infinity | 0.149 | | | | |
| IMG | imaging plane | sphere | infinity | 0.000 | | | | |

**Table 2B**

| Aspherical coefficient of second embodiment | | | | |
|---|---|---|---|---|
| Surface numeral | 3 | 4 | 13 | 14 |
| k | 8.292472E-01 | -9.847701E-01 | 1.733130E+00 | 8.936101E-01 |
| A4 | 1.061021E-03 | 7.003243E-06 | -1.004429E-03 | 4.076520E-04 |
| A6 | -2.698093E-05 | -3.404102E-06 | 3.625433E-05 | 2.879646E-05 |
| A8 | 1.530171E-05 | 1.042635E-06 | -7.804248E-06 | -2.921619E-06 |
| A10 | -2.154634E-06 | -1.159873E-07 | 5.313020E-07 | 2.945841E-07 |
| A12 | 1.781193E-07 | 6.278522E-09 | -1.726148E-08 | -8.121038E-09 |
| A14 | -7.528037E-09 | -1.683239E-10 | 0.000000E+00 | 0.000000E+00 |
| A16 | 1.346044E-10 | 1.745845E-12 | 0.000000E+00 | 0.000000E+00 |

Referring to part (A) of FIG. 4, which is a longitudinal aberration diagram of the optical system 100 in the second embodiment at wavelengths of 665.0000 nm, 634.0000nm, 603.0000nm, 571.0000nm, 546.0000nm, 508.0000nm, 477.0000nm, 453.0000nm, 441.0000nm, and 425.0000nm. From the longitudinal spherical aberration diagram in part (A) of FIG. 4, the astigmatism diagram in part (B) of FIG. 4, and the distortion diagram in part (C) of FIG. 4, the longitudinal spherical aberration, the astigmatism, and the distortion of the optical system 100 have been controlled, thus the optical system 100 of this embodiment has good imaging quality. In addition, the wavelengths corresponding to the curves in parts (A), (B), and (C) of FIG. 4 may refer to the description of parts (A), (B), and (C) in FIG. 2 in the first embodiment, which will not be repeated.

### Third Embodiment

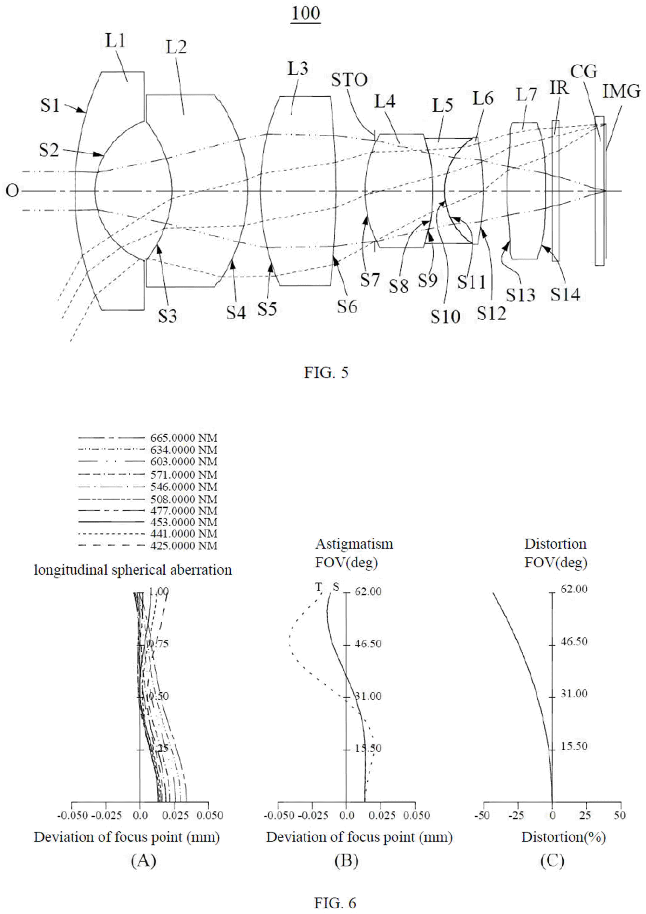

The optical system 100 according to the third embodiment of the present application is shown in FIG. 5. The optical system 100 includes a first lens L1, a second lens L2, a third lens L3, a stop STO, a fourth lens L4, a fifth lens L5, a sixth lens L6, a seventh lens L7, a filter IR, and a protective glass CG, which are sequentially arranged from the object side to the image side along the optical axis O. The first lens L1 has negative refractive power, the second lens L2 has negative refractive power, the third lens L3 has positive refractive power, the fourth lens L4 has positive refractive power, the fifth lens L5 has negative refractive power, the sixth lens L6 has positive refractive power, and the seventh lens IR. L7 has positive refractive power.

The object side surface S1 of the first lens L1 is convex in a paraxial region thereof, and the image side surface S2 of the first lens L1 is concave in a paraxial region thereof. The object side surface S3 of the second lens L2 is concave in a paraxial region thereof, and the image side surface S4 of the second lens L2 is convex in a paraxial region thereof. The object side surface S5 of the third lens L3 is convex in a paraxial region thereof, and the image side surface S6 of the third lens L3 is convex in a paraxial region thereof. The object side surface S7 of the fourth lens L4 is convex in a paraxial region thereof, and the image side surface S8 of the fourth lens L4 is convex in a paraxial region thereof. The object side surface S9 of the fifth lens L5 is concave in a paraxial region thereof, and the image side surface S10 of the fifth lens L5 is concave in a paraxial region thereof. The object side surface S11 of the sixth lens L6 is convex in a paraxial region thereof, and the image side surface S12 of the sixth lens L6 is convex in a paraxial region thereof. The object side surface S13 of the seventh lens L7 is convex in a paraxial region thereof, and the image side surface S14 of the seventh lens L7 is convex in a paraxial region thereof.

Specifically, the Y radius in Table 3A refers to the radius of curvature of the object side surface or the image side surface of the related surface numeral at the optical axis O. The fourth lens L4, fifth lens L5, and sixth lens L6 are cemented together to form a cemented lens group. The surface type and the Y radius of the image side surface S8 of the fourth lens L4 are the same as those of the object side surface S9 of the fifth lens L5. The surface type and the Y radius of the image side surface S10 of the fifth lens L5 are the same as those of the object side surface S11 of the sixth lens L6. It can be understood that the units of the Y radius, the thickness, and the effective focal length in Table 3A are in millimeters, and the refractive index, the Abbe number, and the effective focal length in Table 3A are obtained by the light with reference wavelength of 546.0000nm.

In the third embodiment, the object side surface S3 and the image side surface S4 of the second lens L2 are aspherical surfaces, and the object side surface S13 and the image side surface S14 of the seventh lens L7 are aspherical surfaces. Table 3B provides the cone constant k and high-order coefficients A4, A6, A8, A10, A12, A14, and A16 that can be applied for the aspherical surfaces in the third embodiment.

**Table 3A**

| Third embodiment | | | | | | | | |
|---|---|---|---|---|---|---|---|---|
| F=3.84mm, FNO=1.624, FOV=124°, TTL=31.852mm, ImgH=4.108mm | | | | | | | | |
| Surface numeral | Surface name | Surface type | Y Radius | Thickness | Material | Refractive index | Abbe number | Focal length |
| OBJ | object side | sphere | infinity | infinity | | | | |
| 1 | first lens | sphere | 17.450 | 1.200 | glass | 2.003 | 28.316 | -6.280 |
| 2 | | sphere | 4.591 | 4.627 | | | | |
| 3 | second lens | asphere | -5.889 | 4.502 | glass | 1.809 | 40.970 | -46.867 |
| 4 | | asphere | -9.345 | 0.756 | | | | |
| 5 | third lens | sphere | 14.979 | 4.530 | glass | 2.001 | 29.151 | 11.538 |
| 6 | | sphere | -51.399 | 2.330 | | | | |
| STO | stop | sphere | infinity | -0.590 | | | | |
| 8 | fourth lens | sphere | 7.268 | 4.073 | glass | 1.593 | 68.342 | 7.907 |
| 9 | fifth lens | sphere | -10.876 | 0.701 | glass | 1.855 | 25.155 | -3.159 |
| 11 | sixth lens | sphere | 3.975 | 2.302 | glass | 1.593 | 68.624 | 5.387 |
| 12 | | sphere | -17.641 | 1.454 | | | | |
| 13 | seventh lens | asphere | 13.383 | 2.300 | glass | 1.694 | 53.128 | 18.862 |
| 14 | | asphere | -4005.461 | 0.419 | | | | |
| 15 | filter | sphere | infinity | 0.400 | glass | 1.523 | 54.517 | |
| 16 | | sphere | infinity | 2.199 | | | | |
| 17 | protective glass | sphere | infinity | 0.500 | glass | 1.523 | 54.517 | |
| 18 | | sphere | infinity | 0.148 | | | | |
| IMG | imaging plane | sphere | infinity | 0.000 | | | | |

**Table 3B**

| Aspherical coefficient of third embodiment | | | | |
|---|---|---|---|---|
| Surface numeral | 3 | 4 | 13 | 14 |
| k | -4.401424E-01 | -9.134373E-01 | 0.000000E+00 | 0.000000E+00 |
| A4 | 1.038696E-04 | -7.517461E-05 | -1.903983E-03 | -1.758958E-03 |
| A6 | 2.480384E-05 | 8.063168E-06 | 4.479537E-05 | -2.844450E-05 |
| A8 | -1.849788E-06 | -5.089076E-07 | -1.061307E-05 | 2.172478E-06 |
| A10 | 1.277409E-07 | 1.892350E-08 | 5.592289E-07 | -1.786052E-07 |
| A12 | -3.047092E-09 | -3.163074E-10 | 2.719435E-09 | 1.096524E-08 |
| A14 | 0.000000E+00 | 0.000000E+00 | 0.000000E+00 | 0.000000E+00 |
| A16 | 0.000000E+00 | 0.000000E+00 | 0.000000E+00 | 0.000000E+00 |

Referring to part (A) of FIG. 6, which is a longitudinal aberration diagram of the optical system 100 in the third embodiment at wavelengths of 665.0000 nm, 634.0000nm, 603.0000nm, 571.0000nm, 546.0000nm, 508.0000nm, 477.0000nm, 453.0000nm, 441.0000nm, and 425.0000nm. From the longitudinal spherical aberration diagram in part (A) of FIG. 6, the astigmatism diagram in part (B) of FIG. 6, and the distortion diagram in part (C) of FIG. 6, the longitudinal spherical aberration, the astigmatism, and the distortion of the optical system 100 have been controlled, thus the optical system 100 of this embodiment has good imaging quality. In addition, the wavelengths corresponding to the curves in parts (A), (B), and (C) of FIG. 6 may refer to the description of parts (A), (B), and (C) in FIG. 2 in the first embodiment, which will not be repeated.

### Fourth embodiment

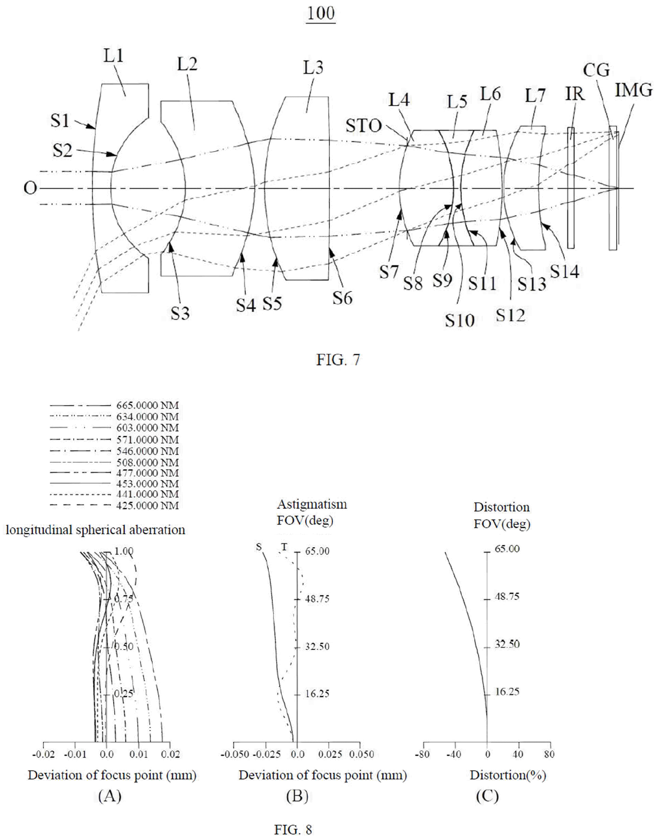

The optical system 100 according to the fourth embodiment of the present application is shown in FIG. 7. The optical system 100 includes a first lens L1, a second lens L2, a third lens L3, a stop STO, a fourth lens L4, a fifth lens L5, a sixth lens L6, a seventh lens L7, a filter IR, and a protective glass CG, which are sequentially arranged from the object side to the image side along the optical axis O. The first lens L1 has negative refractive power, the second lens L2 has negative refractive power, the third lens L3 has positive refractive power, the fourth lens L4 has positive refractive power, the fifth lens L5 has negative refractive power, the sixth lens L6 has positive refractive power, and the seventh lens L7 has positive refractive power.

The object side surface S1 of the first lens L1 is convex in a paraxial region thereof, and the image side surface S2 of the first lens L1 is concave in a paraxial region thereof. The object side surface S3 of the second lens L2 is concave in a paraxial region thereof, and the image side surface S4 of the second lens L2 is convex in a paraxial region thereof. The object side surface S5 of the third lens L3 is convex in a paraxial region thereof, and the image side surface S6 of the third lens L3 is convex in a paraxial region thereof. The object side surface S7 of the fourth lens L4 is convex in a paraxial region thereof, and the image side surface S8 of the fourth lens L4 is convex in a paraxial region thereof. The object side surface S9 of the fifth lens L5 is concave in a paraxial region thereof, and the image side surface S10 of the fifth lens L5 is concave in a paraxial region thereof. The object side surface S11 of the sixth lens L6 is convex in a paraxial region thereof, and the image side surface S12 of the sixth lens L6 is convex in a paraxial region thereof. The object side surface S13 of the seventh lens L7 is convex in a paraxial region thereof, and the image side surface S14 of the seventh lens L7 is concave in a paraxial region thereof.

Specifically, the Y radius in Table 4A refers to the radius of curvature of the object side surface or the image side surface of the related surface numeral at the optical axis O. The fourth lens L4, fifth lens L5, and sixth lens L6 are cemented together to form a cemented lens group. The surface type and the Y radius of the image side surface S8 of the fourth lens L4 are the same as those of the object side surface S9 of the fifth lens L5. The surface type and the Y radius of the image side surface S10 of the fifth lens L5 are the same as those of the object side surface S11 of the sixth lens L6. It can be understood that the units of Y radius, the thickness, and the effective focal length in Table 4A are in millimeters, and the refractive index, the Abbe number, and the effective focal length in Table 4A are obtained by the light with reference wavelength of 546.0000nm.

In the fourth embodiment, the object side surface S3 and the image side surface S4 of the second lens L2 are aspherical surfaces, and the object side surface S13 and the image side surface S14 of the seventh lens L7 are aspherical surfaces. Table 4B provides the cone constant k and high-order coefficients A4, A6, A8, A10, A12, A14, A16 that can be applied for the aspherical surfaces in the fourth embodiment.

**Table 4A**

| Fourth embodiment | | | | | | | | |
|---|---|---|---|---|---|---|---|---|
| F=3.75mm, FNO=1.700, FOV=130°, TTL=34.938mm, ImgH=3.752mm | | | | | | | | |
| Surface numeral | Surface name | Surface type | Y radius | Thickness | Material | Refractive index | Abbe number | Focal length |
| OBJ | object side | sphere | infinity | infinity | | | | |
| 1 | first lens | sphere | 38.039 | 1.200 | glass | 2.003 | 28.316 | -6.397 |
| 2 | | sphere | 5.578 | 4.979 | | | | |
| 3 | second lens | asphere | -6.138 | 4.524 | glass | 1.809 | 40.970 | -35.245 |
| 4 | | asphere | -10.371 | 0.670 | | | | |
| 5 | third lens | sphere | 13.787 | 4.343 | glass | 2.001 | 29.151 | 12.698 |
| 6 | | sphere | -251.372 | 5.144 | | | | |
| STO | stop | sphere | infinity | -0.486 | | | | |
| 8 | fourth lens | sphere | 8.249 | 3.570 | glass | 1.593 | 68.342 | 7.403 |
| 9 | fifth lens | sphere | -8.112 | 0.500 | glass | 1.855 | 25.155 | -4.703 |
| 11 | sixth lens | sphere | 8.928 | 2.743 | glass | 1.593 | 68.624 | 10.264 |
| 12 | | sphere | -17.729 | 0.095 | | | | |
| 13 | seventh lens | asphere | 7.591 | 2.335 | glass | 1.619 | 63.855 | 18.076 |
| 14 | | asphere | 20.305 | 1.915 | | | | |
| 15 | filter | sphere | infinity | 0.400 | glass | 1.517 | 64.199 | |
| 16 | | sphere | infinity | 2.357 | | | | |
| 17 | protective glass | sphere | infinity | 0.500 | glass | 1.517 | 64.199 | |
| 18 | | sphere | infinity | 0.149 | | | | |
| IMG | imaging plane | sphere | infinity | 0.000 | | | | |

**Table 4B**

| Aspherical coefficient of fourth embodiment | | | | |
|---|---|---|---|---|
| Surface numeral | 3 | 4 | 13 | 14 |
| k | 8.482079E-01 | -1.303315E+00 | 1.894348E+00 | 1.894348E+00 |
| A4 | 1.028761E-03 | 1.304605E-05 | -9.673765E-04 | -9.673765E-04 |
| A6 | -3.468209E-05 | 3.604940E-07 | 3.357389E-05 | 3.357389E-05 |
| A8 | 1.779693E-05 | 5.906668E-07 | -9.049605E-06 | -9.049605E-06 |
| A10 | -2.511377E-06 | -7.300497E-08 | 6.191479E-07 | 6.191479E-07 |
| A12 | 2.112359E-07 | 4.217161E-09 | -2.084976E-08 | -2.084976E-08 |
| A14 | -9.205338E-09 | -1.167775E-10 | 0.000000E+00 | 0.000000E+00 |
| A16 | 1.723250E-10 | 1.257809E-12 | 0.000000E+00 | 0.000000E+00 |

Referring to part (A) of FIG. 8, which is a longitudinal aberration diagram of the optical system 100 in the fourth embodiment at wavelengths of 665.0000 nm, 634.0000nm, 603.0000nm, 571.0000nm, 546.0000nm, 508.0000nm, 477.0000nm, 453.0000nm, 441.0000nm, and 425.0000nm. From the longitudinal spherical aberration diagram in part (A) of FIG. 8, the astigmatism diagram in part (B) of FIG. 8, and the distortion diagram in part (C) of FIG. 8, the longitudinal spherical aberration, the astigmatism, and the distortion of the optical system 100 have been controlled, thus the optical system 100 of this embodiment has good imaging quality. In addition, the wavelengths corresponding to the curves in parts (A), (B), and (C) of FIG. 8 may refer to the description of parts (A), (B), and (C) in FIG. 2 in the first embodiment, which will not be repeated.

### Fifth embodiment

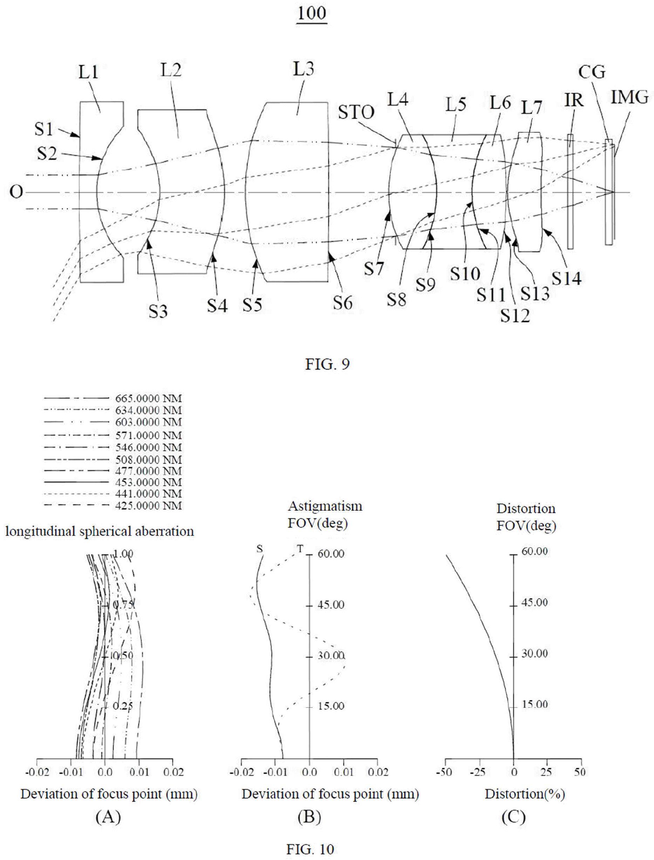

The optical system 100 according to the fifth embodiment of the present application is shown in FIG. 9. The optical system 100 includes a first lens L1, a second lens L2, a third lens L3, a stop STO, a fourth lens L4, a fifth lens L5, a sixth lens L6, a seventh lens L7, a filter IR, and a protective glass CG, which are sequentially arranged from the object side to the image side along the optical axis O. The first lens L1 has negative refractive power, the second lens L2 has negative refractive power, the third lens L3 has positive refractive power, the fourth lens L4 has positive refractive power, the fifth lens L5 has negative refractive power, the sixth lens L6 has positive refractive power, and the seventh lens L7 has positive refractive power.

The object side surface S1 of the first lens L1 is convex in a paraxial region thereof, and the image side surface S2 of the first lens L1 is concave in a paraxial region thereof. The object side surface S3 of the second lens L2 is concave in a paraxial region thereof, and the image side surface S4 of the second lens L2 is convex in a paraxial region thereof. The object side surface S5 of the third lens L3 is convex in a paraxial region thereof, and the image side surface S6 of the third lens L3 is convex in a paraxial region thereof. The object side surface S7 of the fourth lens L4 is convex in a paraxial region thereof, and the image side surface S8 of the fourth lens L4 is convex in a paraxial region thereof. The object side surface S9 of the fifth lens L5 is concave in a paraxial region thereof, and the image side surface S10 of the fifth lens L5 is concave in a paraxial region thereof. The object side surface S11 of the sixth lens L6 is convex in a paraxial region thereof, and the image side surface S12 of the sixth lens L6 is convex in a paraxial region thereof. The object side surface S13 of the seventh lens L7 is convex in a paraxial region thereof, and the image side surface S14 of the seventh lens L7 is concave in a paraxial region thereof.

Specifically, the Y radius in Table 5A refers to the radius of curvature of the object side surface or the image side surface of the related surface numeral at the optical axis O. The fifth lens L5 and the sixth lens L6 are cemented together to form a cemented lens group. The surface type and the Y radius of the image side surface S10 of the fifth lens L5 are the same as those of the object side surface S11 of the sixth lens L6. It can be understood that the units of Y radius, the thickness, and the effective focal length in Table 5A are in millimeters, and the refractive index, the Abbe number, and the effective focal length in Table 5A are obtained by the light with reference wavelength of 546.0000nm.

In the fifth embodiment, the object side surface S3 and the image side surface S4 of the second lens L2 are aspherical surfaces, and the object side surface S13 and the image side surface S14 of the seventh lens L7 are aspherical surfaces. Table 5B provides the cone constant k and high-order coefficients A4, A6, A8, A10, A12, A14, A16 that can be applied for the aspherical surfaces in the fifth embodiment.

**Table 5A**

| Fifth embodiment | | | | | | | | |
|---|---|---|---|---|---|---|---|---|
| F=3.75mm, FNO=1.600, FOV=120°, TTL=37.165mm, ImgH=3.285mm | | | | | | | | |
| Surface numeral | Surface name | Surface type | Y radius | Thickness | Material | Refractive index | Abbe number | Focal length |
| OBJ | object side | sphere | infinity | infinity | | | | |
| 1 | first lens | sphere | 292.409 | 1.200 | glass | 2.003 | 28.316 | -6.304 |
| 2 | | sphere | 6.409 | 4.398 | | | | |
| 3 | second lens | asphere | -6.114 | 4.445 | glass | 1.809 | 40.970 | -30.919 |
| 4 | | asphere | -10.680 | 1.436 | | | | |
| 5 | third lens | sphere | 13.683 | 5.816 | glass | 2.001 | 29.151 | 12.464 |
| 6 | | sphere | -185.891 | 4.619 | | | | |
| STO | stop | sphere | infinity | -0.486 | | | | |
| 8 | fourth lens | sphere | 8.317 | 3.346 | glass | 1.593 | 68.342 | 7.476 |
| 9 | fifth lens | sphere | -8.317 | 2.471 | glass | 1.855 | 25.155 | -4.360 |
| 11 | sixth lens | sphere | 8.317 | 2.377 | glass | 1.593 | 68.624 | 9.975 |
| 12 | | sphere | -19.250 | 0.095 | | | | |
| 13 | seventh lens | asphere | 7.781 | 2.326 | glass | 1.619 | 63.855 | 15.882 |
| 14 | | asphere | 31.606 | 1.816 | | | | |
| 15 | filter | sphere | infinity | 0.400 | glass | 1.517 | 64.199 | |
| 16 | | sphere | infinity | 2.257 | | | | |
| 17 | protective glass | sphere | infinity | 0.500 | glass | 1.517 | 64.199 | |
| 18 | | sphere | infinity | 0.149 | | | | |
| IMG | imaging plane | sphere | infinity | 0.000 | | | | |

**Table 5B**

| Aspherical coefficient of fifth embodiment | | | | |
|---|---|---|---|---|
| Surface numeral | 3 | 4 | 13 | 14 |
| k | 8.065369E-01 | -1.594327E+00 | 2.025479E+00 | -1.088958E+02 |
| A4 | 1.051752E-03 | 3.865687E-05 | -1.463000E-03 | -1.130737E-04 |
| A6 | -3.098000E-05 | -2.227178E-07 | 2.453152E-05 | -3.656650E-05 |
| A8 | 1.765727E-05 | 6.844702E-07 | -1.207894E-05 | -3.234987E-06 |
| A10 | -2.501318E-06 | -7.138333E-08 | 7.930804E-07 | 2.494374E-07 |
| A12 | 2.111731E-07 | 4.095335E-09 | -2.704493E-08 | -7.605404E-09 |
| A14 | -9.274654E-09 | -1.222312E-10 | 0.000000E+00 | 0.000000E+00 |
| A16 | 1.747000E-10 | 1.512267E-12 | 0.000000E+00 | 0.000000E+00 |

Referring to part (A) of FIG. 10, which is a longitudinal aberration diagram of the optical system 100 in the fifth embodiment at wavelengths of 665.0000 nm, 634.0000nm, 603.0000nm, 571.0000nm, 546.0000nm, 508.0000nm, 477.0000nm, 453.0000nm, 441.0000nm, and 425.0000nm. From the longitudinal spherical aberration diagram in part (A) of FIG. 10, the astigmatism diagram in part (B) of FIG. 10, and the distortion diagram in part (C) of FIG. 10, the longitudinal spherical aberration, the astigmatism, and the distortion of the optical system 100 have been controlled, thus the optical system 100 of this embodiment has good imaging quality. In addition, the wavelengths corresponding to the curves in parts (A), (B), and (C) of FIG. 10 may refer to the description of parts (A), (B), and (C) in FIG. 2 in the first embodiment, which will not be repeated.

### Sixth embodiment

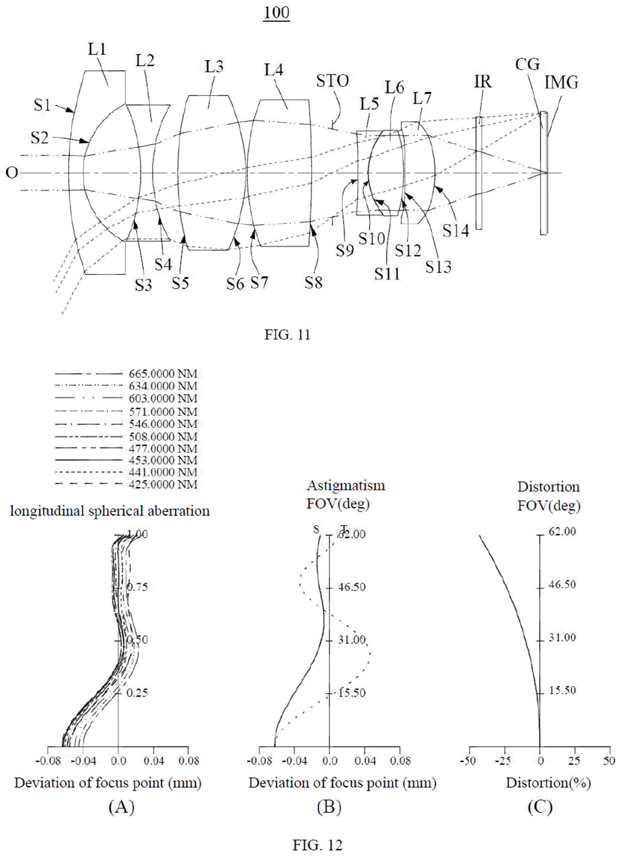

The optical system 100 according to the sixth embodiment of the present application is shown in FIG. 11. The optical system 100 includes a first lens L1, a second lens L2, a third lens L3, a fourth lens L4, a stop STO, a fifth lens L5, a sixth lens L6, a seventh lens L7, a filter IR, and a protective glass CG, which are sequentially arranged from the object side to the image side along the optical axis O. The first lens L1 has negative refractive power, the second lens L2 has negative refractive power, the third lens L3 has positive refractive power, the fourth lens L4 has positive refractive power, the fifth lens L5 has negative refractive power, the sixth lens L6 has positive refractive power, and the seventh lens L7 has positive refractive power.

The object side surface S1 of the first lens L1 is convex in a paraxial region thereof, and the image side surface S2 of the first lens L1 is concave in a paraxial region thereof. The object side surface S3 of the second lens L2 is concave in a paraxial region thereof, and the image side surface S4 of the second lens L2 is concave in a paraxial region thereof. The object side surface S5 of the third lens L3 is convex in a paraxial region thereof, and the image side surface S6 of the third lens L3 is convex in a paraxial region thereof. The object side surface S7 of the fourth lens L4 is convex in a paraxial region thereof, and the image side surface S8 of the fourth lens L4 is convex in a paraxial region thereof. The object side surface S9 of the fifth lens L5 is concave in a paraxial region thereof, and the image side surface S10 of the fifth lens L5 is concave in a paraxial region thereof. The object side surface S11 of the sixth lens L6 is convex in a paraxial region thereof, and the image side surface S12 of the sixth lens L6 is convex in a paraxial region thereof. The object side surface S13 of the seventh lens L7 is convex in a paraxial region thereof, and the image side surface S14 of the seventh lens L7 is convex in a paraxial region thereof.

Specifically, the Y radius in Table 6A refers to the radius of curvature of the object side surface or the image side surface of the related surface numeral at the optical axis O. The fifth lens L5 and the sixth lens L6 are cemented together to form a cemented lens group. The surface type and the Y radius of the image side surface S10 of the fifth lens L5 are the same as those of the object side surface S11 of the sixth lens L6. It can be understood that the units of the Y radius, the thickness, and the effective focal length in Table 6A are in millimeters, and the refractive index, the Abbe number, and the effective focal length in Table 6A are obtained by the light with reference wavelength of 546.0000nm.

In the sixth embodiment, the object side surface S5 and the image side surface S6 of the third lens L3 are aspherical surfaces, and the object side surface S13 and the image side surface S14 of the seventh lens L7 are aspherical surfaces Table 6B provides the cone constant k and high-order term coefficients A4, A6, A8, A10, A12, A14, A16 that can be applied for the aspherical surfaces in the sixth embodiment.

**Table 6A**

| Sixth embodiment | | | | | | | | |
|---|---|---|---|---|---|---|---|---|
| F=3.85mm, FNO=1.63, FOV=124°, TTL=32.514mm, ImgH=4.11mm | | | | | | | | |
| Surface numeral | Surface name | Surface type | Y radius | Thickness | Material | Refractive index | Abbe number | Focal length |
| OBJ | object side | sphere | infinity | infinity | | | | |
| 1 | first lens | sphere | 20.841 | 1.000 | glass | 1.911 | 35.282 | -7.704 |
| 2 | | sphere | 5.242 | 3.903 | | | | |
| 3 | second lens | sphere | -11.305 | 0.799 | glass | 1.589 | 61.253 | -8.365 |
| 4 | | sphere | 9.239 | 1.728 | | | | |
| 5 | third lens | asphere | 21.133 | 4.566 | glass | 1.619 | 63.855 | 12.495 |
| 6 | | asphere | -11.463 | 0.098 | | | | |
| 7 | fourth lens | sphere | 13.815 | 4.350 | glass | 2.003 | 28.316 | 11.429 |
| 8 | | sphere | -72.197 | 1.442 | | | | |
| STO | stop | sphere | infinity | 1.728 | | | | |
| 10 | fifth lens | sphere | -43.701 | 0.699 | glass | 1.8467 | 23.784 | -4.577 |
| 11 | sixth lens | sphere | 4.501 | 2.394 | glass | 1.593 | 68.342 | 5.565 |
| 12 | | sphere | -10.470 | 0.097 | | | | |
| 13 | seventh lens | asphere | 335.197 | 2.038 | glass | 1.619 | 63.855 | 12.338 |
| 14 | | asphere | -7.9235 | 2.803 | | | | |
| 15 | filter | sphere | infinity | 0.400 | glass | 1.523 | 54.517 | |
| 16 | | sphere | infinity | 3.969 | | | | |
| 17 | protective glass | sphere | infinity | 0.400 | glass | 1.523 | 54.517 | |
| 18 | | sphere | infinity | 0.100 | | | | |
| IMG | imaging plane | sphere | infinity | 0.000 | | | | |

**Table 6B**

| Aspherical coefficient of sixth embodiment | | | | |
|---|---|---|---|---|
| Surface numeral | 5 | 6 | 13 | 14 |
| k | -1.705017E+01 | -2.654386E-01 | 0.000000E+00 | 3.481489E+00 |
| A4 | 1.874594E-04 | 2.109927E-05 | -2.950412E-03 | -7.043548E-04 |
| A6 | 2.518609E-06 | 2.325000E-06 | 3.693414E-04 | -1.203613E-05 |
| A8 | -4.683803E-08 | -5.619843E-08 | -1.170640E-04 | -1.557770E-06 |
| A10 | 7.334256E-09 | 2.628300E-09 | 1.390375E-05 | 1.483256E-07 |
| A12 | -1.288848E-10 | -4.964422E-12 | -7.474172E-07 | -1.227339E-08 |
| A14 | 0.000000E+00 | 0.000000E+00 | 0.000000E+00 | 0.000000E+00 |
| A16 | 0.000000E+00 | 0.000000E+00 | 0.000000E+00 | 0.000000E+00 |

Referring to part (A) of FIG. 12, which is a longitudinal aberration diagram of the optical system 100 in the sixth embodiment at wavelengths of 665.0000 nm, 634.0000nm, 603.0000nm, 571.0000nm, 546.0000nm, 508.0000nm, 477.0000nm, 453.0000nm, 441.0000nm, and 425.0000nm. From the longitudinal spherical aberration diagram in part (A) of FIG. 12, the astigmatism diagram in part (B) of FIG. 12, and the distortion diagram in part (C) of FIG. 12, the longitudinal spherical aberration, the astigmatism, and the distortion of the optical system 100 have been controlled, thus the optical system 100 of this embodiment has good imaging quality. In addition, the wavelengths corresponding to the curves in parts (A), (B), and (C) of FIG. 12 may refer to the description of parts (A), (B), and (C) in FIG. 2 in the first embodiment, which will not be repeated.

### Seventh embodiment

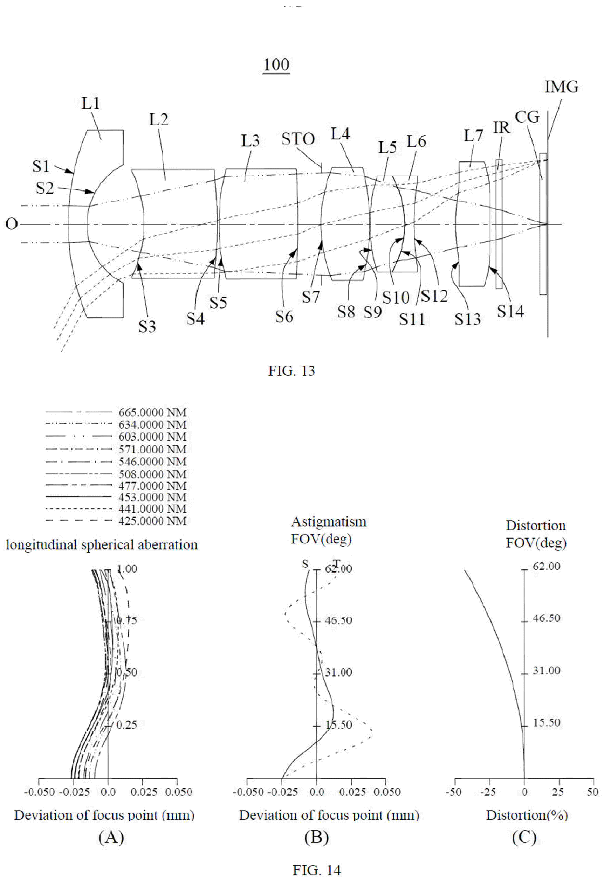

The optical system 100 according to the seventh embodiment of the present application is shown in FIG. 13. The optical system 100 includes a first lens L1, a second lens L2, a third lens L3, a stop STO, a fourth lens L4, a fifth lens L5, a sixth lens L6, a seventh lens L7, a filter IR, and a protective glass CG, which are sequentially arranged from the object side to the image side along the optical axis O. The first lens L1 has negative refractive power, the second lens L2 has negative refractive power, the third lens L3 has positive refractive power, the fourth lens L4 has positive refractive power, the fifth lens L5 has positive refractive power, the sixth lens L6 has positive refractive power, and the seventh lens L7 has negative refractive power.

The object side surface S1 of the first lens L1 is convex in a paraxial region thereof, and the image side surface S2 of the first lens L1 is concave in a paraxial region thereof. The object side surface S3 of the second lens L2 is concave in a paraxial region thereof, and the image side surface S4 of the second lens L2 is convex in a paraxial region thereof. The object side surface S5 of the third lens L3 is convex in a paraxial region thereof, and the image side surface S6 of the third lens L3 is convex in a paraxial region thereof. The object side surface S7 of the fourth lens L4 is convex in a paraxial region thereof, and the image side surface S8 of the fourth lens L4 is convex in a paraxial region thereof. The object side surface S9 of the fifth lens L5 is convex in a paraxial region thereof, and the image side surface S10 of the fifth lens L5 is convex in a paraxial region thereof. The object side surface S11 of the sixth lens L6 is concave in a paraxial region thereof, and the image side surface S12 of the sixth lens L6 is concave in a paraxial region thereof. The object side surface S13 of the seventh lens L7 is convex in a paraxial region thereof, and the image side surface S14 of the seventh lens L7 is concave in a paraxial region thereof.

Specifically, the Y radius in Table 7A refers to the radius of curvature of the object side surface or the image side surface of the related surface numeral at the optical axis O. The fifth lens L5 and the sixth lens L6 are cemented together to form a cemented lens group. The surface type and the Y radius of the image side surface S10 of the fifth lens L5 are the same as those of the object side surface S11 of the sixth lens L6 are the same. It can be understood that the units of the Y radius, the thickness, and the effective focal length in Table 7A are in millimeters, and the refractive index, the Abbe number, and the effective focal length in Table 7A are obtained by the light with reference wavelength of 546.0000nm.

In the seventh embodiment, the object side surface S3 and the image side surface S4 of the second lens L2 are aspherical surfaces, and the object side surface S13 and image side surface S14 of the seventh lens L7 are aspherical surfaces. Table 7B provides the cone constant k and high-order coefficients A4, A6, A8, A10, A12, A14, A16 that can be applied for the aspherical surfaces in the seventh embodiment.

**Table 7A**

| Seventh embodiment | | | | | | | | |
|---|---|---|---|---|---|---|---|---|
| F=3.85mm, FNO=1.63, FOV=124°, TTL=30.485mm, ImgH=4.11mm | | | | | | | | |
| Surface numeral | Surface name | Surface type | Y radius | Thickness | Material | Refractive index | Abbe number | Focal length |
| OBJ | object side | sphere | infinity | infinity | | | | |
| 1 | first lens | sphere | 15.610 | 1.200 | glass | 1.911 | 35.282 | -6.566 |
| 2 | | sphere | 4.253 | 3.635 | | | | |
| 3 | second lens | asphere | -7.118 | 4.618 | glass | 1.810 | 40.993 | -13.875 |
| 4 | | asphere | -24.085 | 0.099 | | | | |
| 5 | third lens | sphere | 13.998 | 5.043 | glass | 2.003 | 28.316 | 11.463 |
| 6 | | sphere | -66.242 | 1.489 | | | | |
| STO | stop | sphere | infinity | -0.028 | | | | |
| 7 | fourth lens | sphere | 9.730 | 3.093 | glass | 1.618 | 63.393 | 9.799 |
| 8 | | sphere | -14.691 | 0.048 | | | | |
| 10 | fifth lens | sphere | 11.202 | 2.199 | glass | 1.593 | 68.624 | 6.934 |
| 11 | sixth lens | sphere | -6.159 | 0.599 | glass | 1.8467 | 23.784 | -5.130 |
| 12 | | sphere | 18.098 | 2.613 | | | | |
| 13 | seventh lens | asphere | 9.816 | 2.199 | glass | 1.588 | 61.284 | 18.59 |
| 14 | | asphere | 76.6813 | 0.380 | | | | |
| 15 | filter | sphere | infinity | 0.400 | glass | 1.523 | 54.517 | |
| 16 | | sphere | infinity | 2.399 | | | | |
| 17 | protective glass | sphere | infinity | 0.400 | glass | 1.523 | 54.517 | |
| 18 | | sphere | infinity | 0.100 | | | | |
| IMG | imaging plane | sphere | infinity | 0.000 | | | | |

**Table 7B**

| Aspherical coefficient of seventh embodiment | | | | |
|---|---|---|---|---|
| Surface numeral | 3 | 4 | 13 | 14 |
| k | 1.464701E+00 | 3.323944E-01 | -9.878743E+01 | 0.000000E+00 |
| A4 | 9.062972E-04 | 3.109977E-04 | 7.633581E-03 | -1.716521E-03 |
| A6 | 4.070022E-05 | 1.926003E-05 | -2.566918E-03 | -6.929263E-05 |
| A8 | -6.179861E-07 | -1.458428E-06 | 4.990224E-04 | 9.302097E-06 |
| A10 | 9.073921E-08 | 9.571158E-08 | -6.577317E-05 | -9.787415E-07 |
| A12 | 1.051151E-09 | -2.312546E-09 | 5.291873E-06 | 4.836895E-08 |
| A14 | -4.365387E-15 | -3.600152E-16 | -2.331725E-07 | 1.564234E-10 |
| A16 | -1.465797E-16 | -5.098140E-17 | 4.324614E-09 | -4.112911E-11 |

Referring to part (A) of FIG. 14, which is a longitudinal aberration diagram of the optical system 100 in the seventh embodiment at wavelengths of 665.0000 nm, 634.0000nm, 603.0000nm, 571.0000nm, 546.0000nm, 508.0000nm, 477.0000nm, 453.0000nm, 441.0000nm, and 425.0000nm. From the longitudinal spherical aberration diagram in part (A) of FIG. 14, the astigmatism diagram in part (B) of FIG. 14, and the distortion diagram in part (C) of FIG. 14, the longitudinal spherical aberration, the astigmatism, and the distortion of the optical system 100 have been controlled, thus the optical system 100 of this embodiment has good imaging quality. In addition, the wavelengths corresponding to the curves in parts (A), (B), and (C) of FIG. 14 may refer to the description of parts (A), (B), and (C) in FIG. 2 in the first embodiment, which will not be repeated.

Table 8A shows the parameters of the optical systems 100 of the first to seventh embodiments, including FOV, FOV/FNO, ImgH/F, FNO, TTL/F, F2/F, |F6/F|, BFL/F, ΣCT/ΣAT, F1/CT1, F4/CT4, R1/(R2+CT1), R7/R8, |R10/SD10|, SD1/SD2, SD4/SD5, SD6/SD7, ET1/CT1, CT3/ET3, |SAGS6/SD6|, SD1/(ImgH×tan(FOV/2)), (FOV×F)/ImgH, and ImgH/(F×tan(FOV/2). Table 8B shows the parameters of the optical systems 100 of the first to seventh embodiments, including F1/F, F3/F, F4/F, |F5/F|, F7/F, R1/R2, |R4/R3|, |R6/R5|, R9/R10, and R12/R11.

**Table 8A**

| | First embodime nt | Second embodime nt | Third embodime nt | Fourth embodime nt | Fifth embodime nt | Sixth embodime nt | Seventh embodime nt |
|---|---|---|---|---|---|---|---|
| FOV | 130 | 124 | 124 | 130 | 120 | 124 | 124 |
| FOV/FNO | 77.3810 | 76.5432 | 76.3547 | 76.4706 | 75.0000 | 76.0736 | 76.0736 |
| ImgH/F | 0.9368 | 1.0622 | 1.0698 | *1.0005* | 0.8760 | 1.0675 | 1.0675 |
| FNO | 1.68 | 1.62 | 1.624 | 1.7 | 1.6 | 1.63 | 1.63 |
| TTL/F | 9.3399 | 8.6802 | 8.2947 | 9.3167 | 9.9108 | 8.4451 | 7.9182 |
| F2/F | -11.9065 | -13.2362 | -12.2049 | -9.3987 | -8.2451 | -2.1727 | -3.6039 |
| \|F6/F\| | 3.1511 | 2.5054 | 1.4029 | 2.7371 | 2.6599 | 1.4455 | 1.3325 |
| BFL/F | 1.4004 | 1.3607 | 0.9549 | 1.4190 | 1.3661 | 1.9929 | 0.9554 |
| ΣCT/ΣAT | 1.9005 | 1.6233 | 2.2859 | 1.8472 | 2.1849 | 1.7612 | 2.4125 |
| F1/CT1 | -5.2035 | -5.3734 | -5.2333 | -5.3306 | -5.2537 | -7.7040 | -5.4717 |
| F4/CT4 | 3.3400 | 1.9258 | 1.9415 | 2.0737 | 2.2339 | 2.6276 | 3.1677 |
| R1/(R2+CT1) | 26.3076 | 2.9656 | 3.0135 | 5.6120 | 38.4314 | 3.3386 | 2.8626 |
| R7/R8 | -1.3920 | -1.0000 | -0.6683 | -1.0169 | -1.0000 | -0.1914 | -0.6623 |
| \|R10/SD10\| | 3.2766 | 2.4340 | 1.3357 | 2.8571 | 2.4847 | 1.6113 | 1.9721 |
| SD1/SD2 | 1.3616 | 1.5383 | 1.0077 | 1.4260 | 1.3168 | 1.4689 | 1.5681 |
| SD4/SD5 | 0.9337 | 1.0463 | 1.1441 | 0.9543 | 0.9150 | 0.9120 | 0.9800 |
| SD6/SD7 | 1.9187 | 1.4412 | 1.0572 | 1.7612 | 1.5792 | 1.0550 | 1.1217 |
| ET1/CT1 | 2.5095 | 2.2198 | 2.3636 | 2.3619 | 2.2409 | 2.7004 | 2.1385 |
| CT3/ET3 | 1.5585 | 1.4544 | 1.3470 | 1.2704 | 1.1686 | 1.6811 | 1.1827 |
| \|SAGS6/SD6\| | 0.0109 | 0.0010 | 0.0669 | 0.0071 | 0.0082 | 0.2239 | 0.0287 |
| SD1/(ImgH×tan(FOV /2)) | 0.8035 | 0.8543 | 0.5548 | 0.7873 | 0.9982 | 0.8876 | 0.7981 |
| (FOV×F)/ImgH | 138.7640 | 116.7415 | 115.9104 | 129.9307 | 136.9863 | 116.1557 | 116.1557 |
| ImgH/(F×tan(FOV/2) ) | 0.4369 | 0.5648 | 0.5688 | 0.4666 | 0.5058 | 0.5676 | 0.5676 |

**Table 8B**

| | First embodiment | Second embodiment | Third embodiment | Fourth embodiment | Fifth embodiment | Sixth embodiment | Seventh embodiment |
|---|---|---|---|---|---|---|---|
| F1/F | -1.6432 | -1.6705 | -1.6354 | -1.7058 | -1.6812 | -2.0010 | -1.7055 |
| F3/F | 3.1059 | 3.5124 | 3.0047 | 3.3861 | 3.3237 | 0.2597 | 2.9774 |
| F4/F | 1.8181 | 1.9589 | 2.0591 | 1.9741 | 1.9935 | 2.9686 | 2.5452 |
| \|F5/F\| | 1.1566 | 1.1814 | 0.8227 | 1.2541 | 1.1628 | 1.1888 | 1.8010 |
| F7/F | 3.7137 | 4.5567 | 4.9120 | 4.8203 | 4.2352 | 3.2047 | 4.8286 |
| R1/R2 | 31.3379 | 3.7211 | 3.8012 | 6.8193 | 45.6276 | 3.9755 | 3.6702 |
| \|R4/R3\| | 1.6314 | 1.5389 | 1.5869 | 1.6895 | 1.7470 | 0.8172 | 3.3837 |
| \|R6/R5\| | 20.4303 | 162.3299 | 3.4314 | 18.2328 | 13.5854 | 0.5424 | 4.7322 |
| R9/R10 | -0.7120 | -1.0000 | -2.7359 | -0.9085 | -1.0000 | -9.7083 | -1.8188 |
| R12/R11 | -2.5509 | -2.1012 | -4.4376 | -1.9857 | -2.3144 | -2.3259 | -2.9386 |

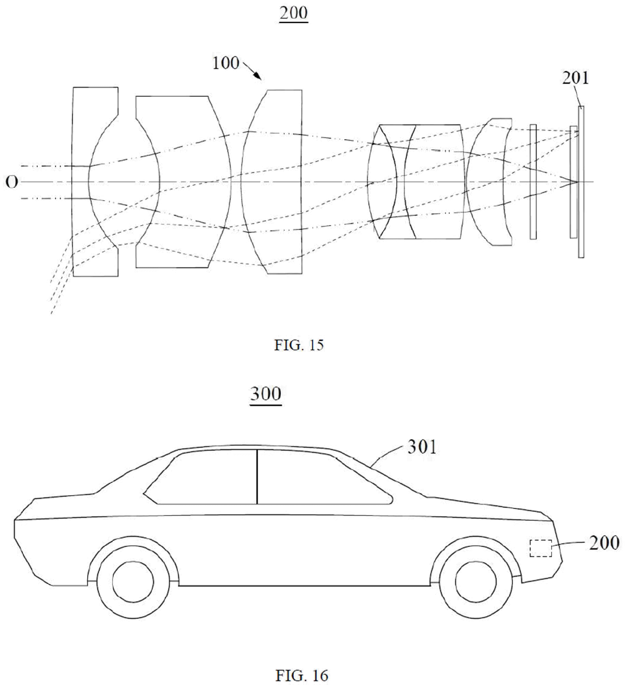

Referring to FIG. 15, the present application further provides a camera module 200. The camera module 200 includes an optical system 100 as described in any one of the above embodiments and an image sensor 201. The image sensor 201 is located at the image side of the optical system 100. The image sensor 201 may be a complementary metal oxide semiconductor (CMOS) or a charge coupled device (CCD).

Referring to FIG. 16, the present application further provides an electronic device 300. The electronic device 300 includes a housing 301 and the camera module 200 mounted on the housing 301. The electronic device 300 may be, but is not limited to an electronic device that support imaging, such as an in-vehicle device, a mobile phone, a drone, a tablet computer, a smartwatch, a thumb camera, a monitor, a dash cam, a laptop, an e-book reader, a portable multimedia players (PMP), a portable telephone, a video phone, a mobile medical device, a wearable device, etc.

The above embodiments are only for describing but not intended to limit the present disclosure. Although the embodiments of the present disclosure have been described, those having ordinary skill in the art can understand that changes may be made within the principles of the present disclosure, up to and including the full extent established by the broad general meaning of the terms used in the claims. It will, therefore, be appreciated that the embodiments described above may be modified within the scope of the claims.

## Claims

1. An optical system (100), **characterized by** comprising a total of seven lenses with refractive power, from an object side to an image side along an optical axis of the optical system (100), the seven lenses sequentially comprising:
a first lens (L1) having negative refractive power, and comprising an object side surface (S1) being convex in a paraxial region thereof and an image side surface (S2) being concave in a paraxial region thereof;
a second lens (L2) having negative refractive power, and comprising an object side surface (S3) being concave in a paraxial region thereof;
a third lens (L3) having positive refractive power, and comprising an object side surface (S5) being convex in a paraxial region thereof;
a fourth lens (L4) having positive refractive power, and comprising an object side surface (S7) being convex in a paraxial region thereof and an image side surface (S8) being convex in a paraxial region thereof;
a fifth lens (L5) having refractive power;
a sixth lens (L6) having refractive power;
a seventh lens (L7) having positive refractive power, and comprising an object side surface (S13) being convex in a paraxial region thereof;
wherein the optical system (100) satisfies following relationships: $120 ° \leq FOV \leq 130 ° ,$ and $75 ° \leq FOV / FNO \leq 77.5 ° ;$
wherein FOV is a maximum field of view of the optical system (100), and FNO is an F-number of the optical system (100).

2. The optical system (100) according to claim 1, **characterized in that**, the optical system (100) further satisfies at least one of following relationships: $0.85 \leq ImgH / F \leq 1.1 ;$ and $1.6 \leq FNO \leq 1.7 ;$ wherein ImgH is half of an image height corresponding to a maximum field of view of the optical system (100), and F is an effective focal length of the optical system (100).

3. The optical system (100) according to claim 1, **characterized in that**, the optical system (100) further satisfies following relationship: $7.9 \leq TTL / F \leq 10 ;$ wherein F is an effective focal length of the optical system (100), and TTL is a distance from the object side surface (S1) of the first lens (L1) to an imaging plane (IMG) of the optical system (100) at the optical axis.

4. The optical system (100) according to claim 1, **characterized in that**, the optical system (100) further satisfies at least one of following relationships: $- 14 \leq F 2 / F \leq - 2 ;$ and $1.3 \leq \left|F6/F\right| \leq 3.2 ;$ wherein F is an effective focal length of the optical system (100), F2 is an effective focal length of the second lens (L2), and F6 is an effective focal length of the sixth lens (L6).

5. The optical system (100) according to claim 1, **characterized in that**, the optical system (100) further satisfies following relationship: $0.95 \leq BFL / F \leq 2 ;$ wherein F is an effective focal length of the optical system (100), and BFL is a distance from an image side surface (S14) of the seventh lens (L2) to an imaging plane of the optical system (100) at the optical axis.

6. The optical system (100) according to claim 1, **characterized in that**, the optical system (100) further satisfies at least one of following relationships: $1.6 \leq \sum CT / \sum AT \leq 2.5 ;$ $- 8 \leq F 1 / CT 1 \leq - 5 ;$ and $1.9 \leq F 4 / CT 4 \leq 3.5 ;$ wherein ΣCT is a sum of thicknesses of the seven lenses at the optical axis, ΣAT is a sum of width of air gaps among the seven lenses at the optical axis, F1 is an effective focal length of the first lens (L1), CT1 is a thickness of the first lens (L1) at the optical axis, F4 is an effective focal length of the fourth lens (L4), and CT4 is a thickness of the fourth lens (L4) at the optical axis.

7. The optical system (100) according to claim 1, **characterized in that**, the optical system (100) further satisfies following relationship: $2.8 \leq R 1 / \left(R2+CT1\right) \leq 40 ;$ wherein R1 is a radius of curvature of the object side surface (S1) of the first lens (L1) at the optical axis, R2 is a radius of curvature of the image side surface (S2) of the first lens (L1) at the optical axis, and CT1 is a thickness of the first lens (L1) at the optical axis.

8. The optical system (100) according to claim 1, **characterized in that**, the optical system (100) further satisfies at least one of following relationships: $- 1.4 \leq R 7 / R 8 \leq - 0.1 ;$ and $1.3 \leq \left|R10/SD10\right| \leq 3.3 ;$ wherein R7 is a radius of curvature of the object side surface (S7)of the fourth lens (L4) at the optical axis, R8 is a radius of curvature of the image side surface (S8) of the fourth lens (L4) at the optical axis, R10 is a radius of curvature of an image side surface (S10) of the fifth lens (L5) at the optical axis, and SD10 is half of a maximum effective aperture of the image side surface (S10) of the fifth lens (L5).

9. The optical system (100) according to claim 1, **characterized in that**, the optical system (100) further satisfies at least one following relationships: $1 \leq SD 1 / SD 2 \leq 1.6 ;$ $0.9 \leq SD 4 / SD 5 \leq 1.2 ;$ and $1 \leq SD 6 / SD 7 \leq 2 ;$ wherein SD1 is half of a maximum effective aperture of the object side surface (S1) of the first lens (L1), SD2 is half of a maximum effective aperture of the image side surface (S2) of the first lens (L1) , SD4 is half of a maximum effective aperture of an image side surface (S4) of the second lens(L2), SD5 is half of a maximum effective aperture of the object side surface (S5) of the third lens (L3), SD6 is half of a maximum effective aperture of an image side surface (S6) of the third lens (L3), and SD7 is half of a maximum effective aperture of the object side surface (S7) of the fourth lens (L4).

10. The optical system (100) according to claim 1, **characterized in that**, the optical system (100) further satisfies at least one of following relationships: $2.1 \leq ET 1 / CT 1 \leq 2.7 ;$ and $1.1 \leq CT 3 / ET 3 \leq 1.7 ;$ wherein ET1 is a distance from a maximum effective aperture of the object side surface (S1) of the first lens (L1) to a maximum effective aperture of the image side surface (S2) of the first lens (L1) along a direction parallel to the optical axis, CT1 is a thickness of the first lens (L1) at the optical axis, ET3 is a distance from a maximum effective aperture of the object side surface (S5) of the third lens (L3) to a maximum effective aperture of an image side surface (S6) of the third lens (L3) along the direction parallel to the optical axis, CT3 is the thickness of the third lens (L3) at the optical axis.

11. The optical system (100) according to claim 1, **characterized in that**, the optical system (100) further satisfies following relationship: $\left|SAGS6/SD6\right| \leq 0.25 ;$ wherein SAGS6 is a distance from an intersection of an image side surface (S6) of the third lens (L3) and the optical axis to a maximum effective aperture of the image side surface (S6) of the third lens (L3) along the direction parallel to the optical axis, and SD6 is half of a maximum effective aperture of the image side surface (S6) of the third lens (L3).

12. The optical system (100) according to claim 1, **characterized in that**, the optical system (100) further satisfies at least one of following relationships: $0.55 \leq SD 1 / \left(ImgH\times tan\left(FOV/2\right)\right) \leq 1 ;$ and $0.43 \leq ImgH / \left(F\times tan\left(FOV/2\right)\right) \leq 0.57 ;$ wherein SD1 is half of a maximum effective aperture of the object side surface (S1) of the first lens (L1), ImgH is half of an image height corresponding to a maximum field of view of the optical system (100), and F is an effective focal length of the optical system (100).

13. The optical system (100) according to claim 1, **characterized in that**, the optical system (100) further satisfies following relationship: $115 ° \leq \left(FOV\times F\right) / ImgH \leq 140 ° ;$ wherein ImgH is half of an image height corresponding to a maximum field of view of the optical system (100), F is an effective focal length of the optical system (100).

14. A camera module (200), **characterized by** comprising:
the optical system (100) according to any one of claims 1 to 13; and
an image sensor located at the image side of the optical system (100).

15. An electronic device (300), **characterized by** comprising:
a housing (301); and
the camera module (200) according to claim 14 and mounted to the housing (301).
